# EUROPÄISCHE PATENTANMELDUNG

(11) **EP 3 581 629 A1**
(43) Veröffentlichungstag der Anmeldung: **18.12.2019**
(21) Anmeldenummer: 19179025.2
(22) Anmeldetag: 07.06.2019
(51) Int. Cl.: C09D 161/14, C09D 161/28, C09D 161/32, B27K 3/15, C08G 8/32, C08L 61/06

(54) **MODIFIZIERTE FORMALDEHYD-BASIERTE HARZE**

(30) Priorität: 11.06.2018 DE 102018209273
(71) Anmelder: Georg-August-Universität Göttingen, 37073 Göttingen (DE)
(72) Erfinder: MILITZ, Holger, 37120 Bovenden (DE); BICKE, Sascha, 37431 Bad Lauterberg (DE); BIZIKIS, Vladimirs, 37133 Niedernjessa (DE)
(74) Vertreter: Wichmann, Hendrik

(57) **Zusammenfassung**

Die vorliegende Erfindung betrifft Verfahren zur Herstellung von hydrophobiertem Material unter Verwendung von modifizierten Formaldehyd-basierten Harzen, wie in den Patentansprüchen definiert. Zudem bezieht sich die Erfindung auf modifizierte Formaldehyd-basierten Harze und die damit hydrophobierten Materialien, sowie die Herstellung der modifizierten Formaldehyd-basierten Harze.

## Beschreibung

Die vorliegende Erfindung betrifft Verfahren zur Herstellung von hydrophobiertem Material unter Verwendung von modifizierten Formaldehyd-basierten Harzen, wie in den Patentansprüchen definiert. Zudem bezieht sich die Erfindung auf modifizierte Formaldehyd-basierten Harze und die damit hydrophobierten Materialien, sowie die Herstellung der modifizierten Formaldehyd-basierten Harze.

### Stand der Technik

Natürliches Holz unterliegt, insbesondere bei Verwendung im Außenbereich, dem biologischen Abbau durch Pilze, dem Bleichen und Abbau durch die Bewitterung (Regen, Sonne) und weist daher eine mittlere Dimensionsstabilität bzw. eine geringe Beständigkeit auf.

Die Eigenschaften von Holz und Holzwerkstoffen können mit verschiedenen Modifizierungsverfahren verbessert werden, wie z.B. Belmadur/DMDHEU (Dimethyloldihydroxy-ethylen-urea), Accoya/Essigsäure, Furfurylierung, Thermoholz und PF (Phenol-Formaldehyd)-Harzen. Eine Holzmodifizierung ändert technische Eigenschaften des Holzes und soll beispielsweise eine hohe Dimensionsstabilität, gute Festigkeitseigenschaften, hohe Resistenz gegenüber Pilzen, etc. verleihen. Die Oberfläche sollte weniger Risse aufweisen, zusätzlich sollte die Vergrauung durch die Bewitterung des modifizierten Holzes im Vergleich zu normalen unbehandelten Holz verzögert werden.

Seit vielen Jahren werden PF-Harze zur chemischen Holzmodifizierung eingesetzt. Durch die Behandlung wird die Dimensionsstabilität und Dauerhaftigkeit von Holz verbessert, und somit der Einsatz im Außen- und Nassbereich ermöglicht. Aktuelle Holzmodifizierungen mit PF-Harzen, welche sich im Lumen anlagern, ergeben optisch eine rot-braune Verdunkelung des Holzes. Für eine gute Löslichkeit der PF-Harze muss der pH-Wert basisch sein, dies ergibt eine starke Verfärbung. Neutrale PF-Harze verfärben das Holz weniger, haben eine geringere Konzentration in Lösung da sie ausfallen, dringen somit nicht ausreichend in die Holzmikroporen ein, und dies führt zu einer geringeren Holzveredelung.

Harze, wie PF-Harze und Melamin-Harnstoff-Formaldehyd-Harze (MUF), besitzen in der Peripherie der Polymere viele freie Hydroxylgruppen. Diese können auch nachteilig sein, da sie hydrophil sind und Wasser aufsaugen (flüssiges und gasförmiges) (siehe Wimmer et al., Wood Sci Technol, 2013, 47, 763-775). Dies führt zum Quellen des Holzes, ermöglicht Pilzbefall und somit werden die Dimensionsstabilität und Dauerhaftigkeit des veredelten Holzes nachteilig beeinflusst. Im Vergleich zu unbehandeltem Holz ist die wasserbedingte Rissbildung und Quellneigung zwar verringert, jedoch wäre es wünschenswert, diese Eigenschaften weiter zu verbessern.

Um das Holz derzeit optimal zu schützen, wird nach der Holzmodifizierung mit PF-Harzen, dessen Oberfläche z.B. mit Acryl-Lack überzogen, alternativ dazu kann die Oberfläche anstelle, davor oder danach mit Wachs, Paraffinen oder Fettsäuren hydrophobisch gestaltet werden. Dies benötigt immer ein Verfahren mit zwei Schritten, zuerst Holzmodifizierung (Imprägnierung, Trocknung, curing/Ausreagieren/Härtung), dann eine Oberflächenbehandlung. Allerdings wird dadurch nicht der Holzkern hydrophob, was ein Nachteil ist, insbesondere wenn das modifizierte Holz bearbeitet wird.

Darüberhinaus sind derartige Verfahren jedoch aufwändig, da sie zwei separate Schritte erfordern. In einem ersten Schritt wird das Holz behandelt (imprägniert, getrocknet und gehärtet). In einem nachfolgenden Beschichtungs-/Hydrophobierungsschritt werden beispielsweise Waxe oder Paraffine aufgebracht.

Eine Möglichkeit zur Hydrophobisierung von Holz, beispielsweise mit dem langkettigen Octadecylisocyanat oder durch Oberflächenkristallisation von Stearylsäure durch chemische Oberflächenmodifizierung mit Palmitoylchlorid, wird von Wang et al. beschrieben (Cellulose, 2015, 22, 289-299 und Wood Sci Technol, 2017, 51, 395-411). Hierbei werden OH-Gruppen von Cellulose-Fasern mit Stearoyl-Gruppen hydrophobiert, was zu statischen Wasserkontaktwinkeln von mehr als 150° führte. Allerdings wird mittels kovalenter Harnstoff-Verbindung und nicht mit PF-Harzen gearbeitet. Eine Modifizierung eines gesamten Holzkörpers wurde gezeigt. Ähnliche Kontaktwinkel wurden auch durch die vorliegende Erfindung erreicht. Allerdings ist dieses bekannte Verfahren, so die Autoren selber, nicht Industrie-tauglich, da zu teuer und zu toxisch.

Die Patentschriften DE 456820 und DE 391072 beschreiben das Verestern von unlöslichen und unschmelzbaren ausgehärteten Phenol-Formaldehyd-Harzen (Resit), um diese löslich zu machen. Die beschriebene "Veresterung" erfolgt unter sehr harschen Bedingungen (300°C) unter Verwendung von Fettsäuren. Welche Strukturen bei dem Aufbrechen des Harznetzwerks entstehen ist nicht beschrieben, genauso wenig die Eigenschaften des löslichen Reaktionsprodukts, welches als Recyclingerzeugnis neue Verwendung finden soll.

Auch die Patentschrift DE 678 719 beschreibt das Verestern von ausgehärteten Phenolaldehydharzen mit Leinölsäure bei hohen Temperaturen zum "Verschließen der Hydroxylgruppen". Hierbei scheint es sich um das Verestern der phenolischen OH-Gruppen im ausgehärteten Harz zu handeln, um die Löslichkeit des Harzes zu beeinflussen. Somit wird dort nicht ein Monomer als Prepolymer synthetisiert, sondern freie Hydroxyl-Gruppen von (schon polymerisierten) Phenolharzen mit organischen Resten abreagiert (z.B. Acetylierung, Benzylchlorid..). Dies modifiziert die Alkalilöslichkeit. Beschrieben wird eine Anwendung als Lack oder Anstrichmittel.

US 3,227,686 offenbart die Verwendung von Alkyl-substituierten Phenolen zur Herstellung von Phenol-Formaldehyd-Harzen mit definierten Eigenschaften.

DE 1 294 669 beschreibt das Herstellen von Epoxidharz-Formteilen. Als Zusatzmittel sind Resole mit veresterten Alkylolgruppen erwähnt, Hauptbestandteil sind aber immer Epoxydharze. Die Verwendung von veresterten Resolen als Harze, insbesondere zur Hydrophobierung ist nicht beschrieben.

US 3,422,068 beschreibt die Herstellung von Phenol-Formaldehyd-Harzen die mit Polyhydroxyaromaten bzw. Resorcinol modifiziert werden. Beschrieben wird deren Hauptanwendung als Bindemittel. Eine Hydrophobierung ist nicht beschrieben.

Die Holzmodifizierung mit einem Gemisch aus Phenol oder Nonylphenol und u.a. Zinkstearat wird von Maohang in der CN104802255 und CN104802253 beschrieben.

Es ist eine Aufgabe der vorliegenden Erfindung, Harze bereitzustellen, die zur Behandlung von Werkstoffen und Produkten, insbesondere Cellulose- und/oder Lignin-haltigem Material wie beispielsweise Holz oder Holzwerkstoffe verwendet werden können, um 'superhydrophobe' Eigenschaften zu verleihen. Diese sollen das Material wetterbeständiger machen, d.h. die Dauerhaftigkeit erhöhen. Das Harz soll bifunktionell sein, d.h. beispielsweise thermisch härtbare (thermosetting) und hydrophobe Gruppen in einem Molekül aufweisen. Dies soll dem Material neue, gewünschte Eigenschaften verleihen. Die vorliegende Erfindung ermöglicht es auch, anstelle von unpolaren Gruppen mit hydrophoben Eigenschaften andere funktionelle Gruppen einzuführen, um gewünschte Eigenschaften zu erzielen. Beispielsweise können aminierte Monomere eingesetzt werden um Pigmente dispergieren zu können.

Zudem soll das Harz vorteilhafte Eigenschaften bezüglich der Eindringtiefe bei der Imprägnierung von Holz aufweisen.

### Zusammenfassung der Erfindung

Eine Ausführungsform der Erfindung betrifft ein Verfahren zur Herstellung von hydrophobiertem Cellulose- und/oder Lignin-haltigem Material, umfassend die Schritte:
(i) Bereitstellen von Cellulose- und/oder Lignin-haltigem Material;
(ii) In-Kontakt-Bringen des Materials aus Schritt (i) mit einem härtbaren, hydrophobierten, Formaldehyd-basierten Harz, wie in den Ansprüchen definiert, welches eines oder mehrere von A, B und C enthält:
   A) modifiziertes Phenol-Formaldehyd-Harz,
   B) modifiziertes Melamin-Formaldehyd-Harz, und
   C) modifiziertes DMDHEU-Harz,
(iii) Aushärten des Materials aus Schritt (ii), unter Erhalt eines hydrophobierten Cellulose- und/oder Lignin-haltigen Materials.

Des Weiteren betrifft die Erfindung die modifizierten Formaldehyd-basierten Harze und die damit hydrophobierten Materialien, sowie die Herstellung der modifizierten Formaldehyd-basierten Harze.

### Beschreibung der Figuren und chemischen Formeln

**Figur 1****:** Schematische Darstellung des nicht-modifizierten PF-Harzes (d.h. PF-Harz, erhalten durch Reaktion von Phenol und Formaldehyd ohne Veresterung) und des modifizierten Harzes (M-PF) für die Behandlung von Holz siehe Figur 2.
**Figur 2****:** Die Abbildung zeigt die Änderung des Kontaktwinkels (KA) als Funktion der Zeit für unbehandeltes Holz und für mit PF-Harz und M-PF behandeltem Holz. Die Holzproben wurden mit den neuen Prepolymeren imprägniert, getrocknet und anschließend auf 140°C erwärmt und für 2 Stunden bei dieser Temperatur gehalten.
   'Holz, M-PF' = Holz das mit dem erfindungsgemäßen härtbaren, hydrophobierten PF-Harz behandelt und gehärtet wurde, wobei ,M-PF für modifiziertes Phenol-Formaldehyd steht.
   'Holz, PF' = Holz das mit nicht-modifiziertem PF-Harz (d.h. PF-Harz, erhalten durch Reaktion von Phenol und Formaldehyd ohne Veresterung) behandelt und gehärtet wurde.
   'Unbeh.' = unbehandelte Holzproben.

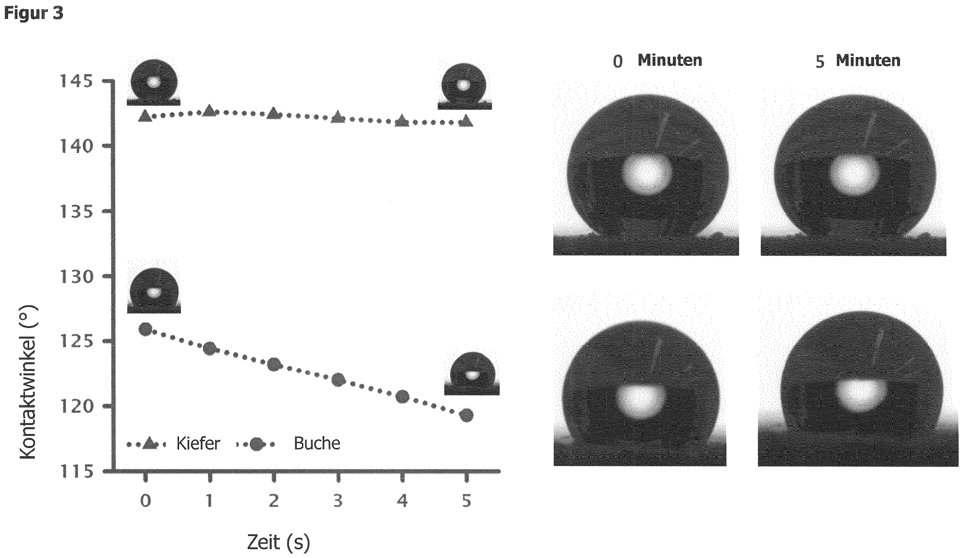

**Figur 3****:** Gezeigt ist die Änderung des Kontaktwinkels (KA) als Funktion der Zeit für Kiefernholz und Buchenholz, behandelt mit dem erfindungsgemäßen härtbaren, hydrophobierten PF-Harz nach oben beschriebener Härtung, bei längerem Exponieren gegenüber Wasser.

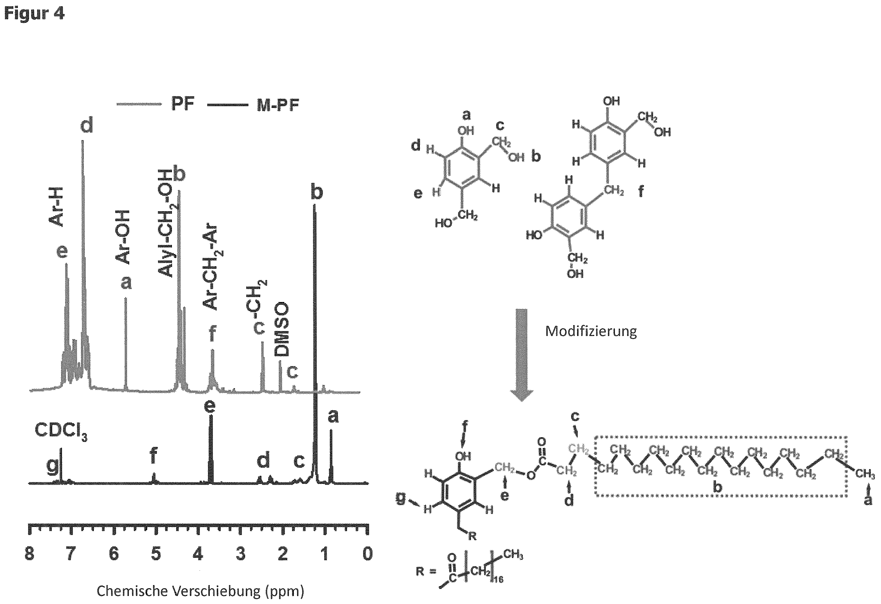

**Figur 4****:** 1H NMR Spektren von nicht-modifiziertem (nativem) PF-Harz (Prepolymer) (oberes Spektrum) und modifiziertem bzw. verestertem PF-Harz (Prepolymer) (unteres Spektrum).

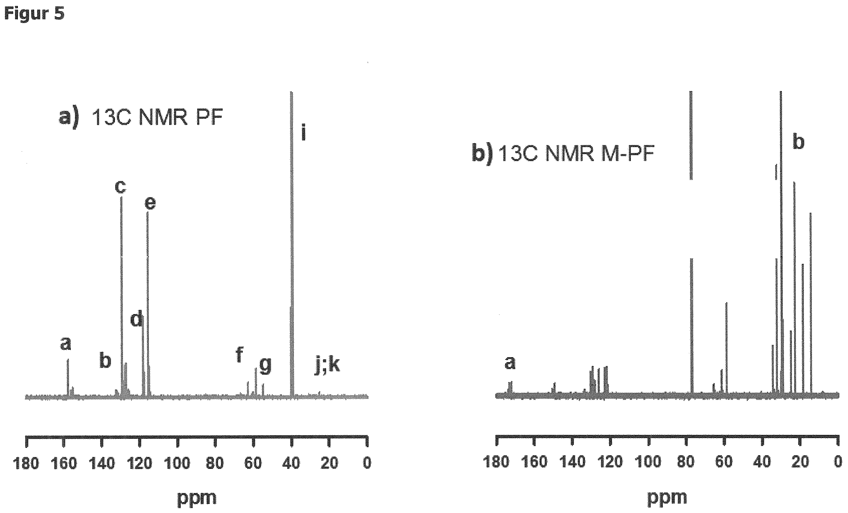

**Figur 5****:** Typische 13C NMR Spektren von nativem (Figur 5a) und modifiziertem PF-Harz (Figur 5b) in d₆-DMSO und d-Chloroform. Die charakteristischen, chemischen Verschiebungen des nativen PF-Harzes (Prepolymer) in d-Chloroform sind in Tabelle 1 angegeben. Die charakteristischen, chemischen Verschiebungen des modifizierten PF-Harzes (Prepolymer) in CDCl₃ sind in Tabelle 2 angegeben.

### Detaillierte Beschreibung der Erfindung

Die vorliegende Erfindung betrifft modifizierte, insbesondere hydrophobierte, Prepolymere, bevorzugt in der Form von Monomeren, zur Herstellung von Formaldehyd-basierten Harzen, insbesondere Phenol-Formaldehyd-Harzen (PF-Harze), Melamin-Formaldehyd-Harzen (MF-Harze), Melamin-Harnstoff-Formaldehyd-Harzen (MUF-Harze) und DMDHEU (1,3-Dimethylol-4,5-dihydroxyethylen-Harnstoff)-Harzen. Beispielsweise kann die Hydrophobizität durch Modifizierung von Resol Prepolymeren (2,4,6-Trimethylolphenol, erhalten aus Formaldehyd und Phenol) durch Teil-Esterifizierung mit langkettigen Fettsäuren (bzw. unter Verwendung von Fettsäurechloriden) erhöht werden.

Die erfindungsgemäßen Harze sind alle Formaldehyd-basiert und weisen daher Methylol-Gruppen auf, die erfindungsgemäß modifiziert werden. Die PF-Harze und MF-Harze sind zudem aromatische Systeme.

Die Erfindung kombiniert auf diese Weise die zweistufige Behandlung aus dem Stand der Technik in einem einzigen Verfahrensschritt durch den Einsatz von modifizierten Prepolymeren. Diese Prepolymere können insbesondere bifunktional sein, d.h. einerseits hydrophobische Seitengruppen besitzen (wie z.B. mit Fettsäuren veresterte OH-Gruppen) und andererseits wasserlösliche Seitengruppen besitzen (wie z.B. phenolische HydroxylGruppe), um eine PF-Harz Lösung zur Holzmodifizierung herstellen zu können.

Die im Stand der Technik als 'Resole' bekannten Phenol-Formaldehyd-Prepolymere sind schmelzbare, lösliche Phenoplaste (im Regelfall Duroplaste), die reaktive Methylolgruppen enthalten (insbesondere 2,4,6-Trimethylolphenol) und bei der Kondensation von Phenolen mit Formaldehyd unter basischen Bedingungen entstehen. Hierbei können auch Dimere Verbindungen (durch Verbrückung von methylolierten oder nicht-methylolierten Phenolen) entstehen, wobei die Menge dieser Dimere durch Verfahrenskontrolle bei Bedarf gering gehalten werden kann. Aufgrund ihrer hohen Anzahl an Hydroxymethylgruppen könnten die Dimere die Kondensationsreaktion sogar fördern. Auch Oligomere können hierbei entstehen.

Aufgrund ihrer Methylolgruppen sind diese Prepolymere, im Gegensatz zu den aus denselben Edukten unter sauren Bedingungen entstehenden Novolaken, selbsthärtend und nicht lange lagerstabil. Resole neigen so zur Selbsthärtung. Unter Erhitzen erhält man die unschmelzbare und unlösliche Endstufe, das Resit. Novolak sind Phenolharze mit einem Formaldehyd-Phenol Verhältnis kleiner als 1:1, die durch saure Kondensation erhalten werden. Sie sind thermoplastisch und können durch Zusatz von Formaldehyd-Spendern gehärtet werden.

Diese erfindungsgemäßen Harze können in der Holzwerkstoffindustrie sowohl als Bindemittel wie auch insbesondere zur Holzmodifizierung der Oberfläche oder eines Holzkörpers verwendet werden. Alternativ könnten sie zusätzlich als Klebstoff für bestimmte Anwendungen verwendet werden. Durch die Holzmodifizierung erhält man beispielsweise eine stark hydrophobische Oberfläche. Diese ist wasserabweisend, reduziert somit die Wasseraufnahme und den Pilzbefall, und erhöht die Dauerhaftigkeit des damit modifizierten Holzes. Dies ermöglicht den Einsatz im Nass- und Außenbereich z.B. in der Küche, Bad, Sauna, Fassaden, Claddings, Terrassen, und Gartenmöbel. Insbesondere könnte auf Zusatzstoffe verzichtet werden, um kostengünstig zu produzieren.

Außerdem bewirkt das "superhydrophobic treatment", dass die Wassertropfen rund bleiben (da die Interaktion zwischen Wasser und Oberfläche minimiert wird) und diese so einfach wegrollen und zusätzlich Schmutzpartikel abtragen.

Die vorliegende Erfindung betrifft somit die folgenden Ausführungsformen:
1. Verfahren zur Herstellung von hydrophobierten Werkstoffen und hydrophobiertem Material, bevorzugt hydrophobiertem Cellulose- und/oder Lignin-haltigem Material, bevorzugt Holz und Holzwerkstoffe, umfassend die Schritte:
   (i) Bereitstellen von zu behandelndem Material, bevorzugt Cellulose- und/oder Lignin-haltigem Material;
   (ii) In-Kontakt-Bringen des Materials aus Schritt (i) mit einem härtbaren, hydrophobierten Harz, welches eines oder mehrere von A, B und C enthält:
      A) Phenol-Formaldehyd-Harz, welches monomere Phenolderivate aufweist, die ein oder mehrere [-CH₂-O-C(O)R₁]-Gruppen am Aromaten (durch Veresterung der Methylolgruppen am Phenol) und/oder eine [-O-C(O)R₁]-Gruppe am Aromaten (durch Veresterung der phenolischen Hydroxygruppe) enthalten;
      B) Melamin-Formaldehyd-Harz, welches monomere Melaminderivate aufweist, die ein oder mehrere [-CH₂-O-C(O)R₁]-Gruppen an einem oder mehreren primären Stickstoffatom(en) des Aromaten (die aus den NH₂-Gruppen des Melamins stammen) enthalten;
      C) DMDHEU-Harz, welches monomere Derivate von 1,3-Dimethylol-4,5-dihydroxyethylen-Harnstoff (DMDHEU) aufweist, die ein oder mehrere [-CH₂-O-C(O)R₁]-Gruppen an den Ringstickstoffatomen enthalten:
         wobei R₁ in (A), (B) und (C) jeweils unabhängig ausgewählt ist aus der Gruppe bestehend aus
         gegebenenfalls substituiertem C₁₋₃₀ Alkyl, gegebenenfalls substituierten C₁₋₃₀ Alkylamidyl, gegebenenfalls substituiertem C₁₋₃₀ Alkoxy, gegebenenfalls substituiertem C₁₋₃₀ Heteroalkyl, gegebenenfalls substituiertem C₂₋₃₀ Alkenyl, gegebenenfalls substituiertem C₂₋₃₀ Alkinyl, gegebenenfalls substituiertem C₇₋₃₀ Alkylaryl, gegebenenfalls substituiertem C₇₋₃₀ Arylalkyl, gegebenenfalls substituiertem C₃₋₃₀ Heterocycloalkyl, gegebenenfalls substituiertem C₃₋₃₀ Alkylheterocyclyl,
         gegebenenfalls substituiertem C₈₋₃₀ Heterobicyclus, gegebenenfalls substituiertem C₁₂₋₃₀ Biaryl, gegebenenfalls substituiertem C₁₀₋₃₀ Bicycloaryl, gegebenenfalls substituiertem C₈₋₃₀ Bicycloalkyl, gegebenenfalls substituierten C₃₋₂₀ Heterocycloaryl,
         wobei der Ausdruck "gegebenenfalls substituiert" bedeutet, dass 1-3 Substituenten vorhanden sind, ausgewählt aus der Gruppe bestehend aus Halogen, -SH, -OH, -CN,-OR, -SR, -COR, -COOR, -NH₂, -NHR, -N(R)₂-C_{L}-NH-C₁₋₆ Alkyl, -N(C₁₋₆ Alkyl)₂, -NH(C₁₋₆ Alkyl), -C_{L}-NH₂, halogen-substituiertes C₁₋₆ R, =O, C₁₋₆ R, wobei R ein C₁₋₁₀-Alkyl, C₆₋₁₂-Aryl, C₂₋₁₀ Alkenyl, C₂₋₁₀ Alkinyl, C₇₋₁₀ Alkylenyl, C₇₋₁₀ Arylalkyl, C₂₋₁₀ Heterocycloalkyl, oder C₂₋₁₀ Alkylheterocyclyl ist, bevorzugt ist R₁ = C₄, C₈, C₁₂ oder C₁₈;
         und wobei der Ausdruck "Alkyl", "Alkenyl", "Alkinyl" lineare, verzweigte und zyklische, bevorzugt lineare, Alkyl-, Alkenyl-, Alkinylketten und gemischte Varianten davon, umfasst;
   (iii) Behandlung, insbesondere Aushärten, des Materials aus Schritt (ii) bei erhöhter Temperatur unter Erhalt eines hydrophobierten Cellulose- und/oder Lignin-haltigen Materials.

Es wird davon ausgegangen, dass die Kettenlänge von R₁ stark mit dem Penetrationsverhalten in das zu behandelnde Material korreliert. Die gewünschten Materialeigenschaften können dadurch eingestellt werden

In Schritt (i) wird das zu behandelnde Material bereitgestellt.

Wie bereits erwähnt, kann das Cellulose- und/oder Lignin-haltige Material in der Form eines geformten Körpers auf der Oberfläche bzw. durch Eindringen in die Oberfläche hydrophobiert werden. Falls das Cellulose- und/oder Lignin-haltige Material vor der Formung eines Körpers behandelt wird, z.B. vor dem Verpressen oder Verkleben des kleinteiligen Materials zu einem Formkörper, kann der gesamte Formkörper hydrophobiert werden.

Das Vorhandensein von reaktiven Gruppen in dem Cellulose- und/oder Lignin-haltigen Material kann zu einer Bindung des modifizierten Harzes und dem Material während des Aushärtens führen. Beispielsweise könnten OH-Gruppen der Cellulose oder des Lignins mit dem Harz reagieren und somit zu einer festeren Bindung zwischen Harz und Material führen.

In Schritt (ii) wird das zu behandelnde Material mit dem Harz in Kontakt gebracht.

Das In-Kontakt-Bringen des Materials aus Schritt (i) mit einem härtbaren, hydrophobierten Harz kann auf dem Fachmann bekannte Weise erfolgen und wird nachfolgend näher beschrieben.

Das in Schritt (ii) verwendete, härtbare, hydrophobierte Harz kann eines oder mehrere der Harze (A), (B) und (C) enthalten. Zusätzlich enthält es bevorzugt noch Lösungsmittel und gegebenenfalls weitere Zusatzstoffe wie beispielsweise Biozide, Farbstoffe und/oder Füllstoffe. Zudem können beispielsweise noch Nebenprodukte bzw. Reagenzien aus dem Herstellungsverfahren oder Kondensationsmittel für die Aushärtung enthalten sein.

In einer Ausführungsform enthält das Harz entweder das Harz (A), (B) oder (C), bevorzugt auch darüberhinaus keine weiteren Harze oder weitere härtbare Monomere/Polymere.

Der Ausdruck ,monomere' Derivate oder Prepolymer bezieht sich auf Moleküle mit nur einem Cyclus/Ring, d.h. ein aromatischer 6-Ring bei Phenolderivaten und Melaminderivaten und ein nicht-aromatischer 5-Ring bei DMDHEU.

In einer Ausführungsform enthält das Harz mindestens 60 Gewichtsprozent, mindestens 70 Gewichtsprozent oder mindestens 80 Gewichtsprozent, bevorzugt mindestens 90 Gewichtsprozent von Harz (A), oder (B) oder (C) oder von Harz (A) und/oder (B) und/oder (C), wobei sich die 'Gewichtsprozent' auf den Feststoffanteil des Harzes (d.h. ohne Lösungsmittel) beziehen.

In einer Ausführungsform enthält das Harz mindestens 40 Gewichtsprozent, mindestens 50 Gewichtsprozent oder mindestens 60 Gewichtsprozent von Harz (A), oder (B) oder (C) oder von Harz (A) und/oder (B) und/oder (C), wobei sich die 'Gewichtsprozent' auf den Feststoffanteil des Harzes (d.h. ohne Lösungsmittel) beziehen und zusätzlich weniger als 60 Gewichtsprozent, weniger als 50 Gewichtsprozent oder weniger als 40 Gewichtsprozent eines unmodifizierten Phenol-Formaldehyd-Harzes (A') und/oder Melamin-Formaldehyd-Harz (B') und/oder DMDHEU-Harz (C'). In einer Ausführungsform sind nur Harzkomponenten (A) und (A'); oder (B) und (B'); oder (C) und (C') enthalten.

Der Lösungsmittelgehalt kann beispielsweise 10-50 Gewichtsprozent, bezogen auf das Gesamtgewicht des Harzes betragen.

In einer Ausführungsform ist das Harz ein hydrophobiertes Phenol-Formaldehyd-Harz (A), das durch Hydrophobisierung eines Phenol-Formaldehyd-Harz (A), d.h. (2,4,6-Trimethylolphenol), durch Verestern mit beispielsweise langkettigen Fettsäuren, erhalten wird. Das modifizierte bzw. hydrophobierte Phenol-Formaldehyd-Harz (A) wird auch als Prepolymer bezeichnet.

Bevorzugt enthält das härtbare, hydrophobierte Harz keine weiteren Harze und/oder polymerisierbaren Komponenten. Beispielsweise sind keine Epoxyharze enthalten. In einer bevorzugten Ausführungsform ist das härtbare, hydrophobierte Harz ein Phenol-Formaldehyd-Harz, dessen Feststoffgehalt zu mindestens 60 Gewichtsprozent, mindestens 70 Gewichtsprozent oder mindestens 80 Gewichtsprozent, bevorzugt mindestens 90 Gewichtsprozent auf Phenolderivaten basiert, wobei der Ausdruck 'Phenolderivate' alle hydrophobierten und nicht-hydrophobierten Phenol-Formaldehyd-Komponenten umfasst, die bei der erfindungsgemäßen zweistufigen Herstellung des modifizierten Phenol-Formaldehyd-Harzes, sowie bei der Herstellung eines nicht-modifizierten Phenol-Formaldehyd-Harzes aus Phenol und Formaldehyd entstehen.

Analog zu dem Phenol-Formaldehyd-Harz kann auch das Melamin-Formaldehyd-Harz modifiziert werden. Hierbei werden ebenso Methylol-Gruppen verestert. Die Methylol-Gruppen entstehen auf dem Fachmann bekannte Weise durch Umsetzen von Melamin mit Formaldehyd. Auch hier kann der Fachmann die Anzahl an Methylol-Gruppen sowie den Grad der Veresterung dieser Methylol-Gruppen im nachfolgenden Schritt kontrollieren.

Analog zu dem Phenol-Formaldehyd-Harz kann auch das DMDHEU-Harz modifiziert werden. Hierbei werden ebenso vorhandene Methylol-Gruppen verestert.

Nachfolgend werden die für R₁ wählbaren Substituenten näher beschrieben.

In einer Ausführungsform ist R₁ in allen [-CH₂-O-C(O)R₁]-Gruppen des Harzes identisch. In einer weiteren Ausführungsform gibt es zwei oder mehr unterschiedliche R₁-Substituenten in den [-CH₂-O-C(O)R₁]-Gruppen des Harzes.

In einer Ausführungsform ist R₁ ausgewählt aus linearen oder verzweigten Alkylgruppen (bevorzugt C6-30 Alkyl), Heteroalkylgruppen (bevorzugt C6-20 Heteroalkyl), Cycloalkylgruppen (bevorzugt C6-20 Cycloalkyl), Heterocycloalkylgruppen (bevorzugt C5-20 Heterocycloalkyl), Arylgruppen, Heteroarylgruppen, Acylgruppen (bevorzugt C6-20 Acyl), Alkoxygruppen (bevorzugt C6-20), Aryloxygruppen (bevorzugt C6-12). Besonders gute hydrophobe Eigenschaften können mit C6-30 Alkyl-, insbesondere C12-30 Alkyl-Resten erzielt werden. In einer bevorzugten Ausführungsform ist R1 = -[CH₂-]₁₀₋₁₆-CH₃.

Bevorzugt beträgt der maximale Substitutionsgrad (DS) bei PF, MF und DMDHEU Prepolymeren 1.
2. Verfahren nach Ausführungsform 1, wobei das härtbare, hydrophobierte Phenol-Formaldehyd-Harz (A), das/die folgende(n) Struktureinheit(en), bevorzugt als monomere Prepolymer(e), enthält:
(1) 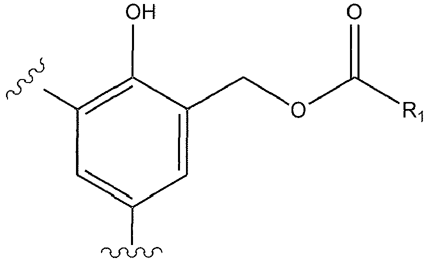 und/oder
(2) 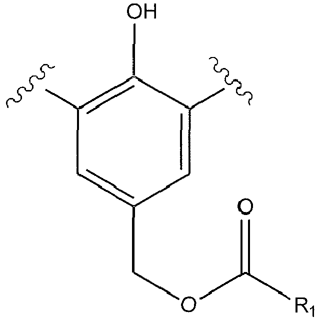 und/oder
(3) 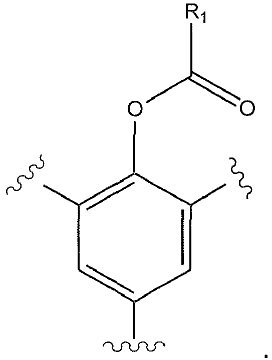 wobei R₁ wie in Ausführungsform 1 definiert ist. Die Prepolymere (1) und (2) sind leichter herstellbar als (3) und daher vom synthetischen Standpunkt her bevorzugt.
3. Verfahren nach einer vorangegangenen Ausführungsform, wobei das härtbare, hydrophobierte Phenol-Formaldehyd-Harz (A), das folgende monomere Prepolymer enthält: 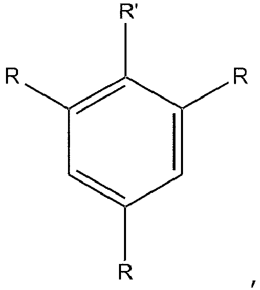
wobei R unabhängig ausgewählt ist aus -H, [-CH₂-O-C(O)R₁] und [-CH₂-OH], wobei bevorzugt mindestens ein R-Substituent [-CH₂-OH] ist,
wobei R' ausgewählt ist aus -OH und [-O-C(O)R₁], wobei
R₁ wie in Ausführungsform 1 oder an anderen Stellen hierin definiert ist, und wobei mindestens eines von R und R' [-O-C(O)R₁] oder [-CH₂-O-C(O)R₁] ist.
4. Verfahren nach Ausführungsform 1, wobei das härtbare, hydrophobierte Melamin-Formaldehyd-Harz (B), die folgende Struktureinheit, bevorzugt als monomeres Prepolymer, enthält: 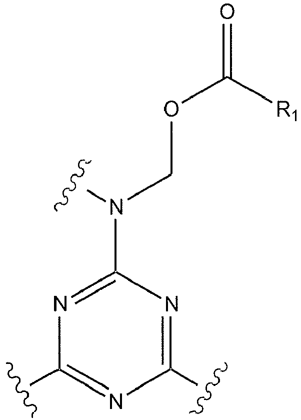 wobei R₁ wie in Ausführungsform 1 oder an anderen Stellen hierin definiert ist.
5. Verfahren nach Ausführungsform 1 oder 4, wobei das härtbare, hydrophobierte Melamin-Formaldehyd-Harz (B), das folgende, monomere Prepolymer enthält: 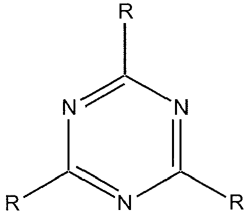
wobei R unabhängig ausgewählt ist aus -NH₂, [-NH-CH₂-O-C(O)R₁], [-N(CH₂-O-C(O)R₁)₂], [-NH-CH₂-OH], und [-N(CH₂-OH)₂], wobei bevorzugt mindestens ein R-Substituent [-NH-CH₂-OH], oder [-N(CH₂-OH)₂] ist;
wobei R₁ wie in Ausführungsform 1 oder an anderen Stellen hierin definiert ist, und wobei mindestens ein R [-NH-CH₂-O-C(O)R₁], oder [-N(CH₂-O-C(O)R₁)₂], ist; und wobei die einzelnen R₁-Gruppen gleich oder unterschiedlich sein können.
6. Verfahren nach Ausführungsform 1, wobei das härtbare, hydrophobierte DMDHEU-Harz (C), die folgende Struktureinheit, bevorzugt als monomeres Prepolymer, enthält: 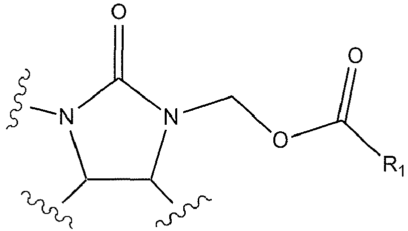 wobei R₁ wie in Ausführungsform 1 oder an anderen Stellen hierin definiert ist.
7. Verfahren nach Ausführungsform 1 oder 6, wobei das härtbare, hydrophobierte DMDHEU-Harz (C), das folgende, monomere Prepolymer enthält: 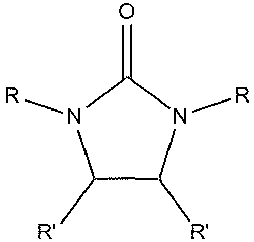
wobei R unabhängig ausgewählt ist aus [-CH₂-O-C(O)R₁], und [-CH₂-OH];
wobei R' unabhängig ausgewählt ist aus -OH und [-O-C(O)R₁];
wobei R₁ wie in Ausführungsform 1 oder an anderen Stellen hierin definiert ist, und wobei mindestens ein R oder R' [-CH₂-O-C(O)R₁] oder [-O-C(O)R₁] ist, bevorzugt ist das monomere Prepolymer 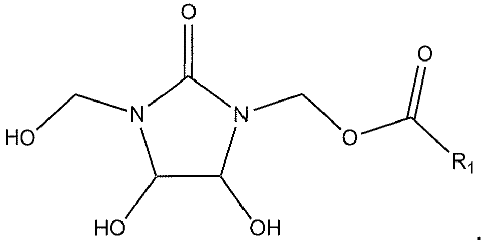
8. Das Verfahren nach einer vorangegangenen Ausführungsform, wobei das härtbare, hydrophobierte Phenol-Formaldehyd-Harz (A) eine oder mehrere Verbindungen enthält, ausgewählt aus der Gruppe bestehend aus:

| | |
|---|---|
| (a) | (b) |
| 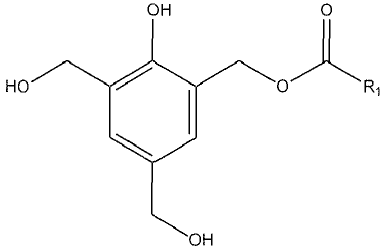 | 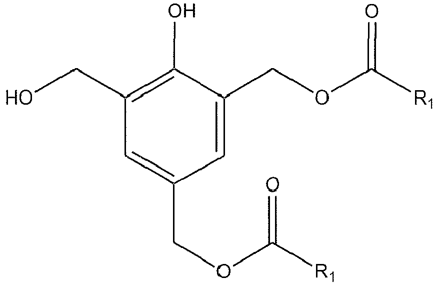 |
| (c) | (d) |
| 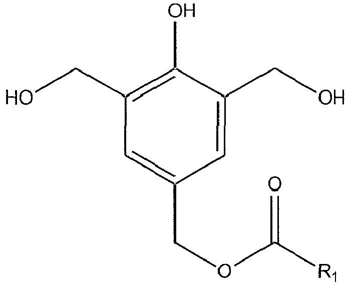 | 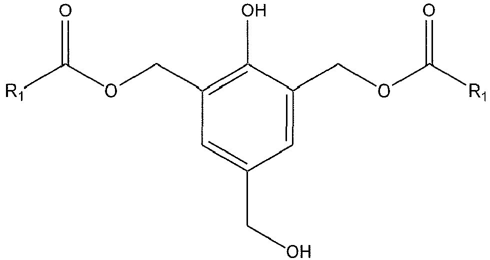 |
| (e) | (f) |
| 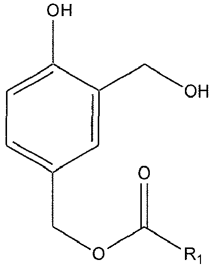 | 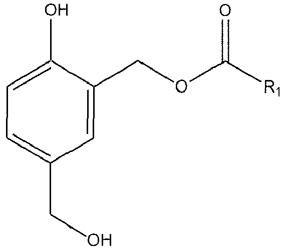 |
| (g) | |
| 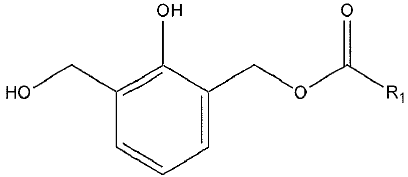 | |

9. Das Verfahren nach einer der vorangegangenen Ausführungsformen, wobei das härtbare, hydrophobierte Phenol-Formaldehyd-Harz (A) eine oder mehrere Verbindungen enthält, ausgewählt aus der Gruppe bestehend aus:

| | |
|---|---|
| (h) | (i) |
| 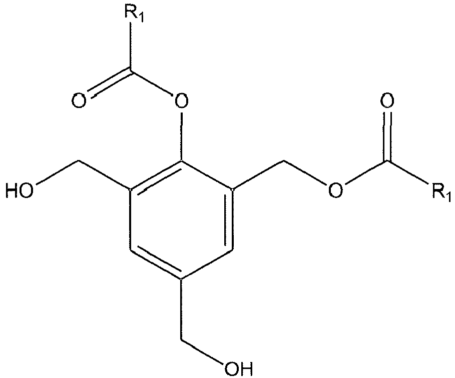 | 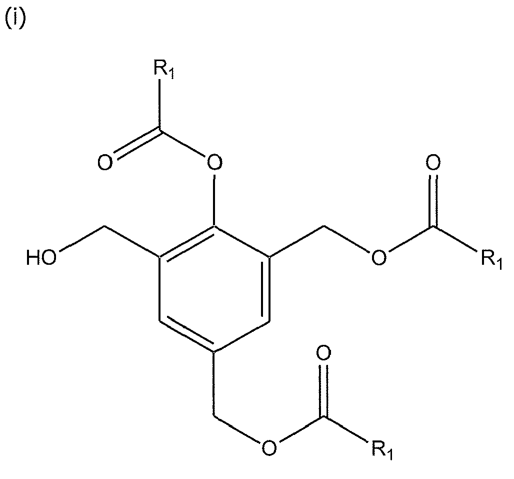 |
| (j) | (k) |
| 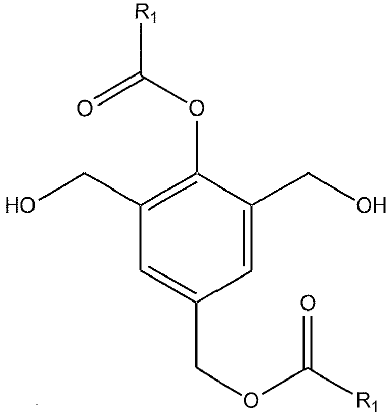 | 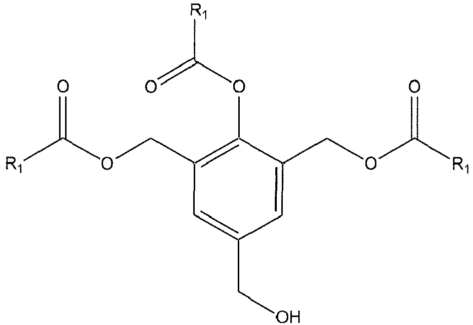 |
| (l) | (m) |
| 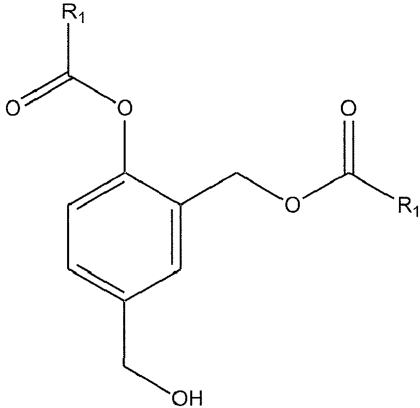 | 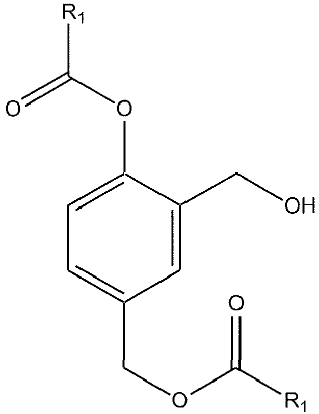 |
| (n) | |
| 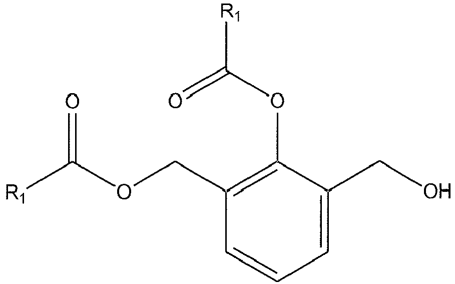 | |

Die Prepolymere (h)-(n) sind synthetisch aufwändiger als die Prepolymere (a)-(g). Daher sind die Prepolymere (a)-(g) vom synthetischen Standpunkt her bevorzugt.
Eine Möglichkeit zur Herstellung von Prepolymeren ist die Verwendung von Schutzgruppen-Chemie. Beispielsweise können Hydroxylgruppen von primären Alkoholen über regioselektive Substitution geschützt werden. So könnte Tetra(hydroxymethyl)pyridin in Pyridin gelöst und mit Thexyldimethylsilylchloride TDMS-Cl die para- und die phenolische OH-Gruppe geschützt werden. Die Schutzgruppe kann anschließend mit Tetrabutylammonium fluoride (TBAF) abgespalten werden.
10. Das Verfahren nach einer vorangegangenen Ausführungsform, wobei das härtbare, hydrophobierte Phenol-Formaldehyd-Harz (A) mindestens 15 Gewichtsprozent, mindestens 20 Gewichtsprozent oder mindestens 30 Gewichtsprozent, bezogen auf den Feststoffanteil des Harzes, von einer oder mehreren Komponenten/Prepolymeren mit mindestens einer [-CH₂-OH]-Gruppe und mindestens einer [-O-C(O)R₁]-Gruppe und/oder mindestens einer [-CH₂-O-C(O)R₁]-Gruppe am Phenolring, enthält.
11. Das Verfahren nach einer vorangegangenen Ausführungsform, wobei das härtbare, hydrophobierte Phenol-Formaldehyd-Harz (A) mindestens 15 Gewichtsprozent, mindestens 20 Gewichtsprozent oder mindestens 30 Gewichtsprozent, bezogen auf den Feststoffanteil des Harzes, von einer oder mehreren der Komponenten (a) 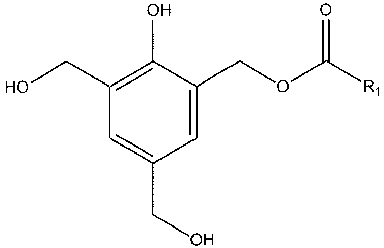 und (c) 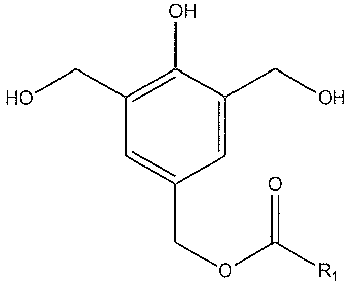 enthält.
12. Das Verfahren nach einer vorangegangenen Ausführungsform, wobei das härtbare, hydrophobierte Phenol-Formaldehyd-Harz eine oder mehrere Verbindungen, bevorzugt in einer Gesamtmenge von weniger als 20 Gewichtsprozent bezogen auf den Feststoffanteil des Harzes, enthält, ausgewählt aus der Gruppe bestehend aus:

| | |
|---|---|
| (o) | (p) |
| 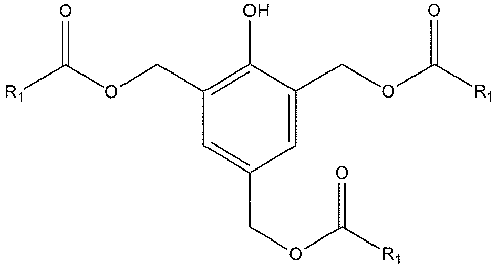 | 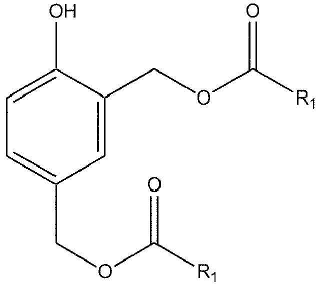 |
| (q) | (r) |
| 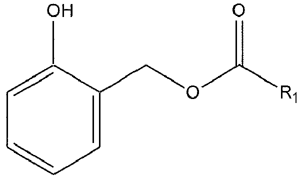 | 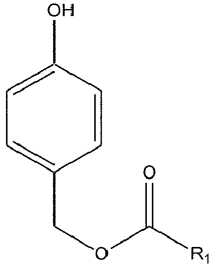 |
| (w) | (t) |
| 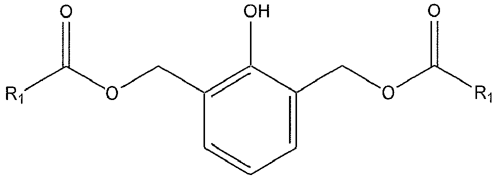 | 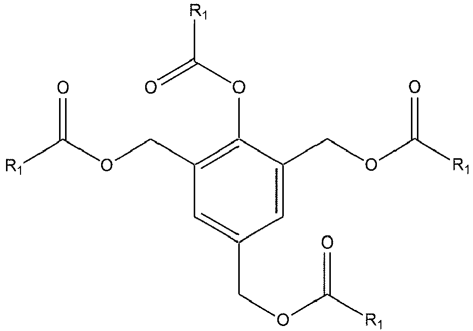 |

13. Das Verfahren nach einer vorangegangenen Ausführungsform, wobei das härtbare, hydrophobierte Phenol-Formaldehyd-Harz weiterhin eines oder mehrere enthält von:

| | |
|---|---|
| (1) | (2) |
| 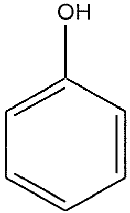 | 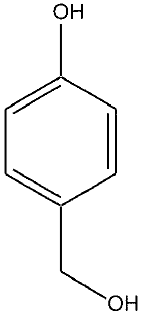 |
| (3) | (4) |
| 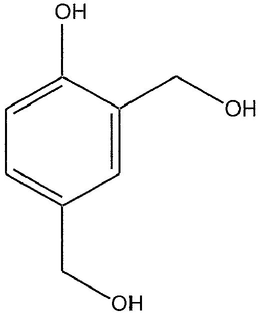 | 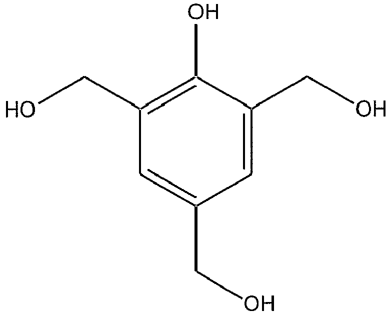 |
| (5) | (6) |
| 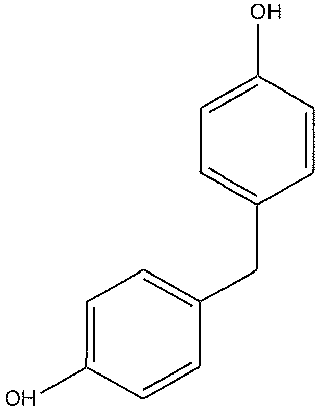 | 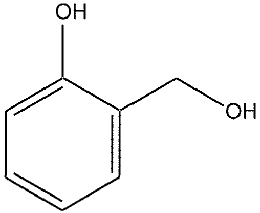 |
| (7) | (8) |
| 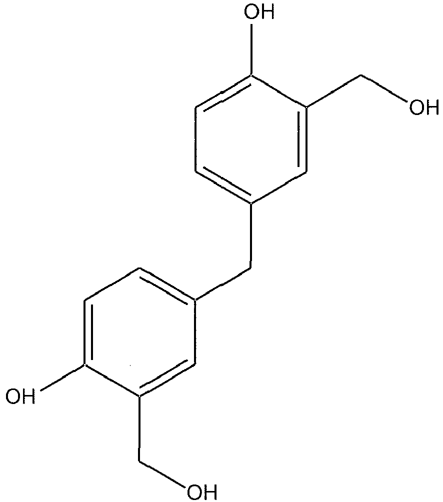 | 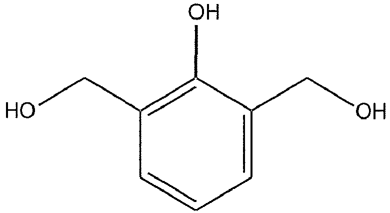 |
| (9) | |
| 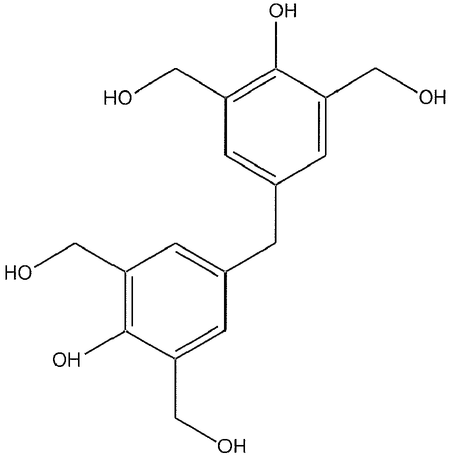 | |

14. Das Verfahren nach einer vorangegangenen Ausführungsform, wobei das härtbare, hydrophobierte Harz bevorzugt weniger als 40 Gewichtsprozent oder weniger als 30 Gewichtsprozent, bezogen auf den Feststoffanteil des Harzes, an dimeren und polymeren Verbindungen enthält.
15. Das Verfahren nach einer vorangegangenen Ausführungsform, wobei das härtbare, hydrophobierte Melamin-Formaldehyd-Harz (B) eine oder mehrere Verbindungen enthält, ausgewählt aus der Gruppe bestehend aus:

| | |
|---|---|
| (a') | (b') |
| 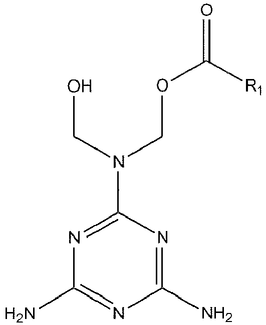 | 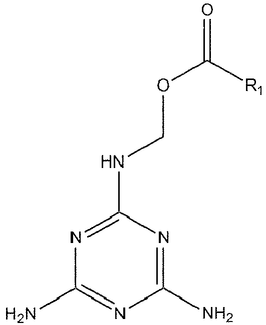 |
| (c') | (d') |
| 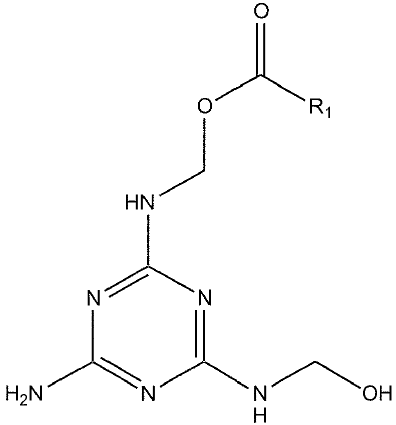 | 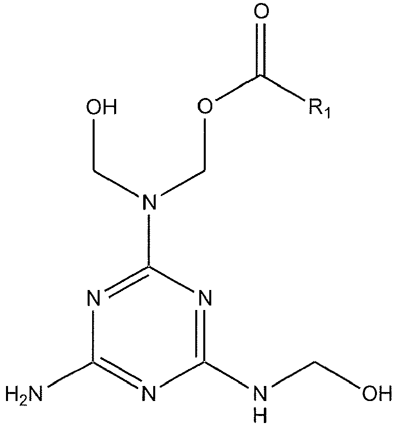 |
| (e') | (f') |
| 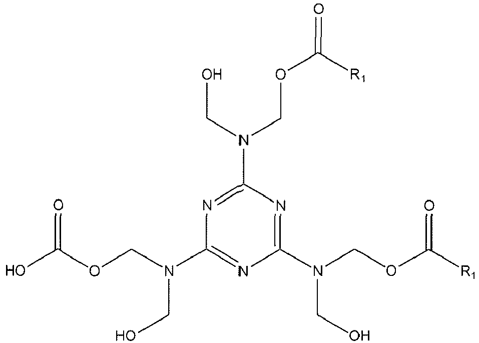 | 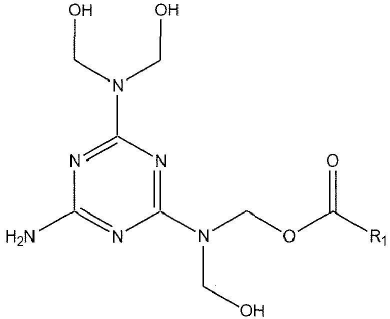 |
| (g') | (h') |
| 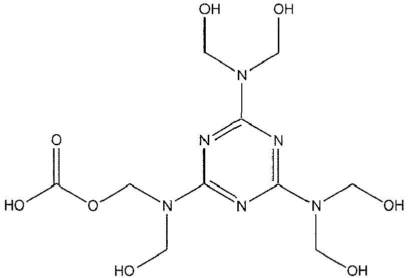 | 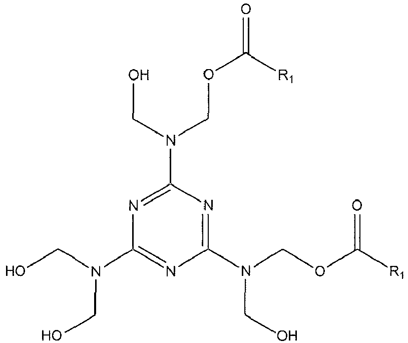 |
| (i') | |
| 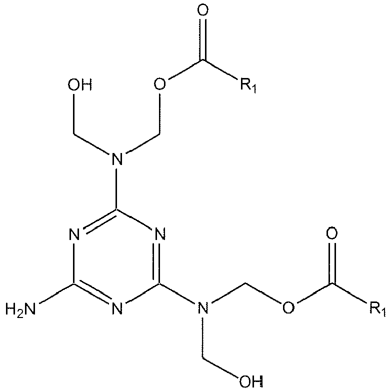 | |

16. Das Verfahren nach einer vorangegangenen Ausführungsform, wobei das härtbare, hydrophobierte Melamin-Formaldehyd-Harz (B) weiterhin eines oder mehrere enthält von:

| | |
|---|---|
| (1') | (2') |
| 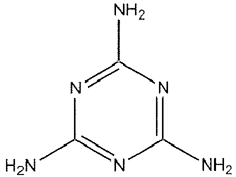 | 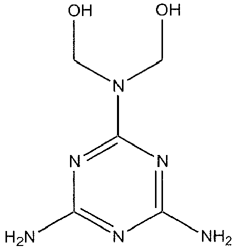 |
| (3') | (4') |
| 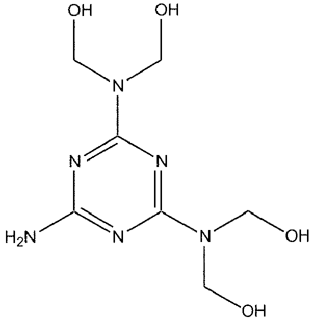 | 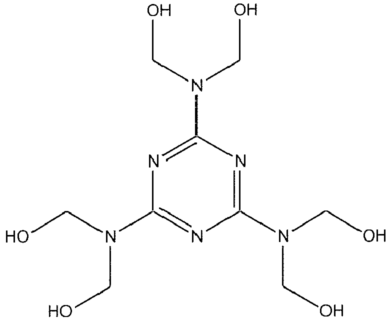 |

17. Das Verfahren nach einer vorangegangenen Ausführungsform, wobei das härtbare, hydrophobierte Melamin-Formaldehyd-Harz (B) mindestens 15 Gewichtsprozent, mindestens 20 Gewichtsprozent oder mindestens 30 Gewichtsprozent, bezogen auf den Feststoffanteil des Harzes, von einer oder mehreren Komponenten/Prepolymeren mit mindestens einer [-NH-CH₂-OH]-, oder [-N(CH₂-OH)₂]-Gruppe und mindestens einer [-NH-CH₂-O-C(O)R₁], oder [-N(CH₂-O-C(O)R₁)₂]-Gruppe am Aromaten enthält.
18. Das Verfahren nach einer vorangegangenen Ausführungsform, wobei das härtbare, hydrophobierte DMDHEU-Harz (C) eine oder mehrere Verbindungen enthält, ausgewählt aus der Gruppe bestehend aus:

| | |
|---|---|
| (a") | (b") |
| 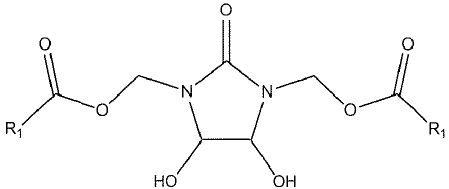 | 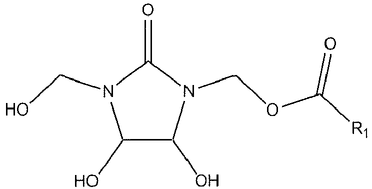 |
| (c") | (d") |
| 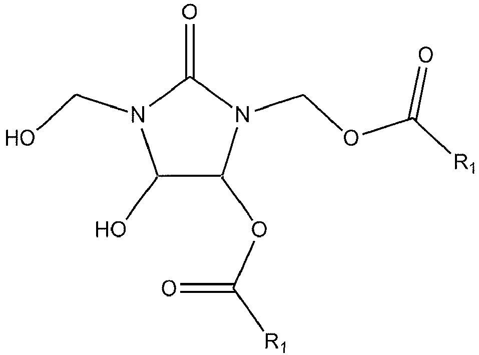 | 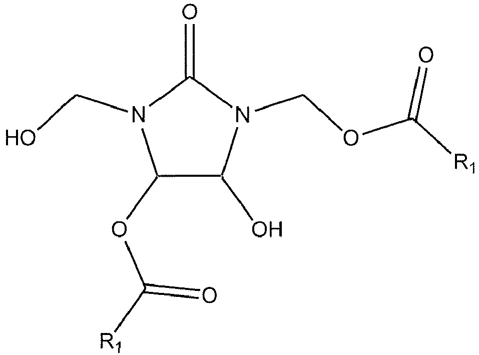 |

19. Das Verfahren nach einer vorangegangenen Ausführungsform, wobei das härtbare, hydrophobierte DMDHEU-Harz (C) weiterhin enthält:

| | |
|---|---|
| (1") | |
| 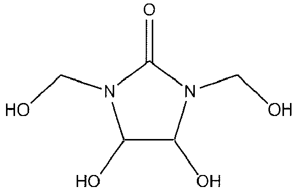 | |

20. Das Verfahren nach einer vorangegangenen Ausführungsform, wobei das härtbare, hydrophobierte Harz mindestens 15 Gewichtsprozent, mindestens 20 Gewichtsprozent oder mindestens 30 Gewichtsprozent, bezogen auf den Feststoffanteil des Harzes, des Prepolymers 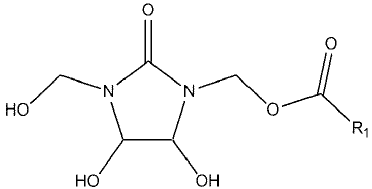 enthält.
21. Das Verfahren gemäß einer der vorangehenden Ausführungsformen, wobei das härtbare, hydrophobierte Harz weiterhin Formaldehyd und/oder ein organisches Lösungsmittel enthält.
Das härtbare, hydrophobierte Harz kann beispielsweise einen Feststoffgehalt von 20-90 Gewichtsprozent aufweisen. Die esterifizierten PF Prepolymere können in der Form von Pulvern eingesetzt werden, wobei diese zur Herstellung von Lösungen mit unterschiedlichen Konzentrationen verwendet werden können.
22. Das Verfahren gemäß einer der vorangehenden Ausführungsformen, wobei das härtbare, hydrophobierte Harz in Schritt (ii) nicht-hydrophobiertes, härtbares Harz enthält.
23. Das Verfahren gemäß einer der vorangehenden Ausführungsformen, wobei das In-Kontakt-bringen in Schritt (ii) durch Aufbringen des härtbaren, hydrophobierten Harzes und Einbringen desselben in das zu behandelnde Material durch Anstreichen, Sprühen, Eintauchen, Imprägnieren, oder Vakuum-Druck-Imprägnieren erfolgt.
24. Das Verfahren gemäß einer der vorangehenden Ausführungsformen, wobei das Cellulose- und/oder Lignin-haltige Material, ausgewählt ist aus der Gruppe bestehend aus Holz oder Holzwerkstoffen, insbesondere Holz, Balken, Holzspäne, Holzbretter, Papier oder Holzfasern; Faserplatten; Spanplatten; Dämmstoffen; Dämmplatten; Oriented Strandboards; Unoriented Strandboards; Furnieren; Sperrholz; Holzkompositwerkstoffen; Engineered Wood Products; Baumwolle; Baumwollprodukte; Einjahrespflanzen; Holzwerkstoffe aus Einjahrespflanzen; insbesondere sind die Holzwerkstoffe mitteldichte Holzwerkstoffe mit einer Dichte von 550 kg/m³ bis 800 kg/m³, ultraleichte Holzwerkstoffe mit einer Dichte von unter 550 kg/m³ und hochdichte Holzwerkstoffe mit einer Dichte von größer als 800 kg/m³.
Im Zusammenhang mit der vorliegenden Erfindung wird der Begriff "Holz" wie folgt verstanden: Holz bezeichnet das harte Gewebe der Sprossachsen (Stamm, Äste und Zweige) von Bäumen und Sträuchern. Kennzeichnend ist hierbei die Einlagerung von Lignin in die Zellwand. In einer weitergehenden Definition wird Holz daher auch als lignifiziertes (verholztes) pflanzliches Gewebe begriffen. Das Material kann auch Recycling-Holz sein, das bereits ausgehärtetes Bindemittel enthält.
Der Begriff "Engineered Wood Products" (man-made wood) betrifft verklebte Produkte, die Vollholz als lasttragende Werkstoffe ersetzen können, beispielsweise Span- oder Faserwerkstoffe, oder Vollholzprodukte wie Brettschichtholz (mit und ohne Keilzinkung).
Darüberhinaus könnte auch die Anwendung des Harzes auf Materialien, die nicht Cellulose- und/oder Lignin-haltig sind, möglich sein. Insbesondere könnte jeder Werkstoff oder Produkt mit dem Harz behandelt, z.B. beschichtet, werden.
25. Das Verfahren gemäß einer der vorangehenden Ausführungsformen, wobei das Aushärten bei einer Temperatur im Bereich von 50 bis 140°C nach der Behandlung mit dem Harz durchgeführt wird.
26. Das Verfahren gemäß einer der vorangehenden Ausführungsformen, wobei das härtbare, hydrophobierte Harz bei einem Druck von weniger als 100 kPa, bevorzugt weniger als 50 kPa, auf ein Cellulose- und/oder Lignin-haltigem Material, insbesondere Holz, aufgebracht wird.
27. Härtbares, hydrophobiertes Harz wie in einer der vorangehenden Ausführungsformen definiert.
28. Das härtbare, hydrophobierte Harz nach Ausführungsform 27, in einer Form die geeignet ist zum Imprägnieren und Beschichten von Cellulose- und/oder Lignin-haltigem Material, insbesondere Holz.
29. Das härtbare, hydrophobierte Harz nach Ausführungsform 27 oder 28 in der Form einer wässrigen Lösung oder Dispersion, bevorzugt in einem organischen Lösungsmittel.
30. Das härtbare, hydrophobierte Harz nach einer der Ausführungsformen 27-29, die zusätzlich Lignin und/oder Tannin enthält.
31. Das härtbare, hydrophobierte Harz nach einer der Ausführungsformen 27-30, die zusätzlich nicht-modifiziertes Phenol-Formaldehyd-Harz und/oder Melamin-Formaldehyd-Harz und/oder Melamin-Harnstoff-Formaldehyd-harz und/oder DMDHEU-Harz enthält.
Das Gewichtsverhältnis der modifizierten und nicht-modifizierten Harze kann je nach Anwendung gewählt werden. Beispielsweise können Verhältnisse von modifiziertem zu nicht-modifiziertem Harz in einem Bereich von 1:4 bis 4:1 liegen, oder 1:4 bis 1:1 bzw. 1:1 bis 4:1.
32. Das härtbare, hydrophobierte Harz nach einer der Ausführungsformen 27-32, das zusätzlich Pigmente und/oder Biozide, insbesondere Fungizide, enthält.
Die Verwendung von Fungiziden macht das Material gegen Pilzbefall widerstandsfähiger, insbesondere bei hoher Umgebungsfeuchtigkeit oder Bewitterung.
33. Verwendung des härtbaren, Harzes nach einer der Ausführungsformen 27-32 zur Hydrophobierung und/oder als Haftvermittler von Cellulose- und/oder Lignin-haltigem Material, insbesondere Holz und Holzwerkstoffe.
34. Die Verwendung nach Ausführungsform 33, wobei zusätzlich ein Kondensationsmittel, insbesondere ein basisches Kondensationsmittel verwendet wird.
35. Die Verwendung nach einer der Ausführungsformen 33, wobei das härtbare, hydrophobierte Phenol-Formaldehyd-Harz als Bestandteil eines Lacks oder einer Holzschutzfarbe eingesetzt wird.
36. Verfahren zur Herstellung des härtbaren, hydrophobierten Harzes wie in einem der vorangegangenen Ausführungsformen definiert, umfassend die Schritte:
a) Umsetzen von Formaldehyd mit Phenol und/oder Melamin und/oder Harnstoff+Glyoxal in der Gegenwart eines (basischen) Katalysators, bevorzugt Natriumhydroxid, bevorzugt Phenol und Katalysator;
b) Verestern des Reaktionsgemisches aus Schritt (a) unter Verwendung von einem oder mehreren Säurechlorid(en) der Formel R₁(O)X, wobei R₁ wie in einer der vorangegangenen Ausführungsformen definiert ist und wobei X eine Abgangsgruppe ist, die bevorzugt ausgewählt ist aus Halogenen, bevorzugt Chlor, Brom und Iod, und Triflaten.
Im "Lehrbuch der Lacktechnologie: 5. Auflage" von Brock et al. (Vincentz, 2017, Kapitel 2.1) wird die Synthese von Mono-/Di-/Tri-Methylol-phenol und Resol beschrieben. Schritt a) kann daher wie im Stand der Technik bekannt durchgeführt werden. Die Veresterung mit Fettsäure-Chloriden von monomeren PF-Harzen wird aber nicht erwähnt.
In Dehabadi et al. 2013 "Durable press finishing of cotton fabrics: An overview. " Textile research journal: 83(13) 1-22), werden MF-Harze in Verbindung mit Farbstoffen beschrieben, sowie auch in Kombination mit der Esterifizierung von Zellulosefasern, zur Veredelung von Geweben.
37. Verfahren zur Herstellung des härtbaren, hydrophobierten Phenol-Formaldehyd-Harzes wie in einem der vorangegangenen Ausführungsformen definiert, umfassend die Schritte:
A) Umsetzen von Formaldehyd mit Phenol oder DMDHEU in der Gegenwart eines basischen Katalysators, bevorzugt Natriumhydroxid;
B) Aufbringen einer Schutzgruppe an zumindest einem Teil der [-CH₂-OH]-Gruppen;
C) (Teil-)Verestern der ungeschützten [-CH₂-OH]-Gruppen und/oder OH-Gruppen am Phenol/DMDHEU des Reaktionsgemisches aus Schritt (B) unter Verwendung von einem oder mehreren Säurechlorid(en) der Formel R₁(O)X, wobei R₁ wie in einer der vorangegangenen Ausführungsformen definiert ist und wobei X eine Abgangsgruppe ist, die bevorzugt ausgewählt ist aus Halogenen, bevorzugt Chlor, Brom und Iod, und Triflaten; und
D) Abspalten der Schutzgruppe.
Geeignete Schutzgruppen sind dem Fachmann bekannt und beispielsweise in Greene's Protective Groups in Organic Synthesis (Peter G.M. Wuts, Theodora W. Greene, 2014 John Wiley & Sons, Inc., Hoboken, New Jersey, 5. Auflage) beschrieben.
In den erfindungsgemäßen Verfahren kann die Anzahl der Methylol-Gruppen am Phenol bzw. Melamin, sowie der Grad der Veresterung gesteuert werden. Beispielsweise ist dies durch die Kontrolle der Stöchiometrie und/oder Reaktionsdauer und/oder Reaktionstemperatur und/oder pH, sowie Menge und Kettenlänge der zu veresternden R₁-Komponente möglich.
Selbstverständlich ist es auch möglich eine Trennung der monomeren und dimeren bzw. polymeren Spezies nach jedem Reaktionsschritt und insbesondere vor der Anwendung des Harzes durchzuführen. Alternative oder zusätzlich dazu können auch die monomeren Spezies je nach gewünschten Eigenschaften aufgetrennt werden. Beispielsweise können mono-, di- und/oder tri-methylolierte Verbindungen getrennt werden. Zudem können zu wenig oder zu stark veresterte Spezies abgetrennt werden. Da durch die Veresterung der für die Polymerisation reaktiven (freien) Gruppen die Polymerisationseigenschaften bzw. der Polymerisationsgrad reduziert wird, sind insbesondere Spezies mit zwei freien Gruppen, z.B. zwei [-CH₂-OH]-Gruppe am Phenolring, bevorzugt. In den hydrophobierten Phenolderivaten kann dann entweder die phenolische OH-Gruppe und/oder (falls vorhanden) die dritte [-CH₂-OH]-Gruppe verestert sein.
38. Verwendung des härtbaren, hydrophobierten Harzes nach einer der Ausführungsformen 27-32, wobei die härtbare Zusammensetzung mittels Formaldehyd mit dem Cellulose- und/oder Lignin-haltigen Material reagiert wird.
39. Hydrophobiertes Cellulose- und/oder Lignin-haltiges Material, hergestellt oder herstellbar durch ein Verfahren gemäß einer der Ausführungsformen 1-26.
40. Das hydrophobierte Cellulose- und/oder Lignin-haltige Material nach Ausführungsform 39, welches in dem ausgehärteten, hydrophobierten Phenol-Formaldehyd-Harz die folgende Struktureinheit als Polymerbestandteil enthält:
(1) 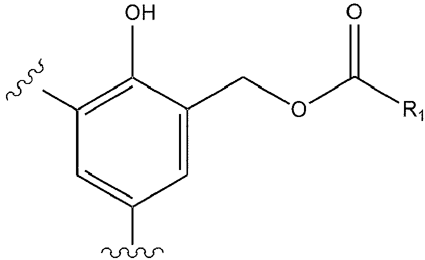 und/oder
(2) 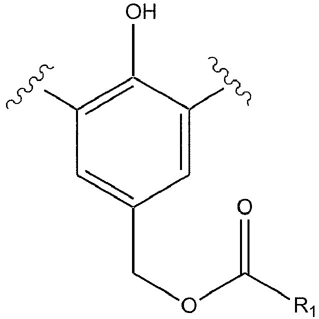 und/oder
(3) 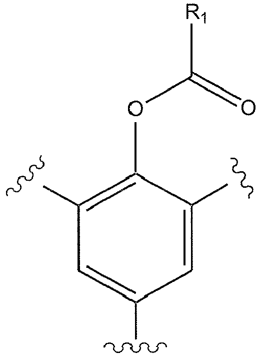 und/oder 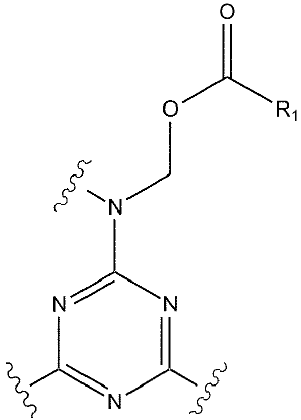 und/oder 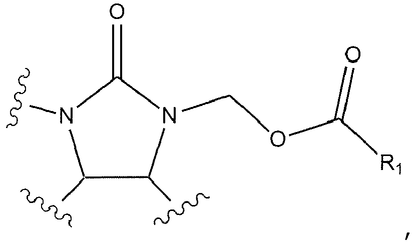 Wobei R₁ jeweils wie in den vorangegangenen Ausführungsformen definiert ist.

Der Begriff "Werkstoff", so wie hier verwendet, betrifft Materialien, die nach gegebenenfalls weiterer Verarbeitung, der beabsichtigten Verwendung zugeführt werden. Beispielsweise können Dämmplatten zugeschnitten werden und dann in das zu dämmende Objekt eingebaut werden.

Der Ausdruck "Alkyl", wie er hierin verwendet wird, bezieht sich auf geradkettige oder verzweigte, gesättigte oder ungesättigte Kohlenwasserstoff-Substituenten, Beispiele der Alkylgruppen schließen ein Methyl, Ethyl, Propyl, Butyl, Pentyl, Hexyl, Octyl, Decyl, Isopropyl, sec-Butyl, Isobutyl, tert-Butyl, Isopentyl, Vinyl, Allyl, 1-Butenyl, 2-Butenyl, Isobutenyl, und Pentenyl.

Der Ausdruck "Cycloalkyl" oder "Kohlenstoffzyklen", wie er hierin verwendet wird, bezieht sich auf gesättigte oder ungesättigte, nicht aromatische Kohlenwasserstoffzyklen, die aus eins, zwei oder mehr Ringen bestehen können. Beispiele hiervon schließen ein: Cyclopropyl, Cyclobutyl, Cyclopentyl, Cyclopentenyl, Cyclopentadienyl, Cyclohexyl, Cyclohexonyl, usw.

Der Ausdruck "Heteroalkyl", wie er hierin verwendet wird, bezieht sich auf geradkettige oder verzweigte, gesättigte oder ungesättigte Kohlenwasserstoff - Substituenten, in denen mindestens ein Kohlenstoff durch ein Heteroatom ersetzt ist. Die Heteroatome sind bevorzugt ausgewählt aus S, N, O, und P.

Der Ausdruck "Aryl", wie er hierin verwendet wird, bezieht sich auf aromatische Substituenten, die aus ein oder mehreren miteinander fusionierten Ringen bestehen können. Beispiele für Aryl schließen ein: Phenyl, Naphtyl und Antracenyl.

Der Ausdruck "Acyl", wie er hierin verwendet wird, bezieht sich auf die funktionelle Gruppe mit der allgemeinen Struktur Ra-(C=O) - wobei Ra einen gegebenenfalls substituierten Kohlenwasserstoffrest darstellt, insbesondere eine Kohlenstoffkette mit C1 bis C8 Kohlenstoffatomen.

Der Ausdruck "Heteroaryl", wie er hierin verwendet wird, bezieht sich auf aromatische Substituenten, die aus ein oder mehreren miteinander fusionierten Ringen bestehen können. Hierbei ist mindestens ein Kohlenstoffatom der aromatischen R-Gruppe durch ein Heteroatom ersetzt, insbesondere S, N, O oder P. Beispiele für Heteroarylgruppen schließen ein: Pyridinyl, Furanyl, Pyrrolyl, Triazolyl, Pyrazolyl, Imidazolyl, Thiophenyl, Indolyl, Benzofuranyl, Benzimidazolyl, Indazolyl, Benzotriazolyl, Benzisoxazolyl, und Chinolinyl.

Der Ausdruck "Heterocycloalkyl" oder "Heterozyklen", wie er hierin verwendet wird, bezieht sich auf gesättigte oder ungesättigte, nicht aromatische zyklische Kohlenwasserstoff-Substituenten, die aus ein oder mehreren miteinander fusionierten Ringen bestehen können, dabei ist mindestens ein Kohlenstoff in einem der Ringe durch ein Heteroatom ersetzt, insbesondere S, N, O oder P. Beispiele für Heterocycloalkyle schließen ein: Tetrahydrofuranyl, Pyrrolidinyl, Piperidinyl, 1 ,4-Dioxanyl, Morpholinyl, Piperazinyl, Oxyzolidinyl, Decahydrochinolinyl.

Die Herstellung der Holzwerkstoffe kann unter Verwendung von üblichen Vorrichtungen, z.B. Heizpressen, wie im Stand der Technik bekannt, und dem erfindungsgemäßen Harz als Bindemittel erfolgen. Beispielhafte Verfahren sind in den hierein zitierten Dokumenten zu finden, beispielsweise in der DE2711958. Siehe auch Dunky, M., Niemz, P. (2002) Holzwerkstoffe und Leime - Technologie und Einflussfaktoren. Springer-Verlag, Berlin, Heidelberg, Seiten 122 - 128; und Deppe, H., Ernst, K. (2000) Taschenbuch der Spanplattentechnik. DRW-Verlag, Leinfelden-Echterdingen.

Die Ausdrücke "thermisches Aushärten", "thermomechanisches Aushärten" oder "mechanisches Aushärten" der Mischung betrifft das Anwenden von Verfahrensbedingungen, die es erlauben, das erfindungsgemäß verwendete Bindemittelsystem zu polymerisieren. Geeignete Bedingungen sind dem Fachmann bekannt und können je nach Bindemittelsystem durch Routineversuche optimiert werden.

### Beispiele

### Messung des statischen Wasserkontaktwinkels

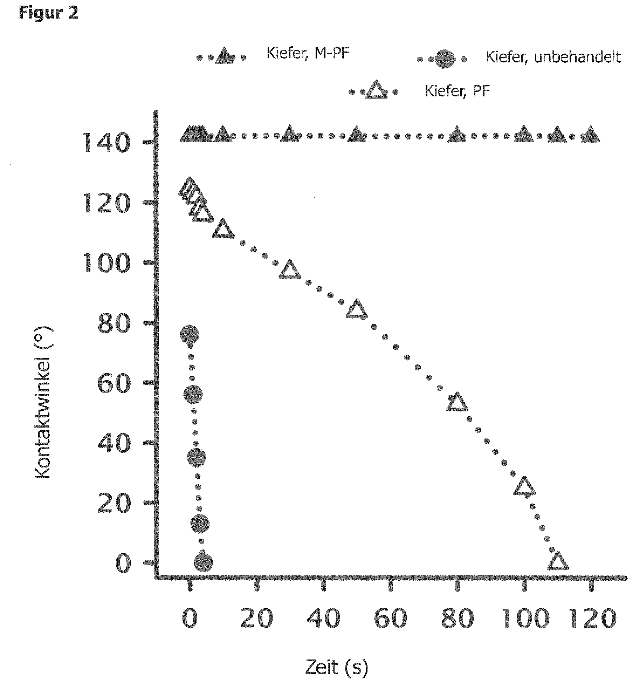

Der Kontaktwinkel (KW) eines Tropfens (4 µl) von entionisiertem Wasser auf einem transversalen Holzabschnitt wurde gemessen und die Änderungen des Kontaktwinkels über einen Zeitraum von 300 Sekunden bestimmt. Der KW von unbehandelten und PFbehandelten Holzproben nahm innerhalb der ersten Sekunden sehr stark ab. Nach 4 Sekunden zeigen die unbehandelten Kiefernproben keinen KW mehr (siehe Figur 2).

Das PF-behandelte Holz zeigte eine wesentlich langsamere Abnahme des KW im Vergleich mit den unbehandelten Holzproben. Nach 110 Sekunden konnte jedoch kein KW mehr gemessen werden. Diese leichte Verbesserung der Änderungsgeschwindigkeit des KW könnte dadurch erklärt werden, dass das Vorhandensein von PF-Harz in der Holzzellwand zu einer verringerten Zugänglichkeit der Oberfläche gegenüber Wasser führt, sowie dadurch, dass die hydrophobe chemische Struktur des Phenols mehr Hydrophobizität verleiht.

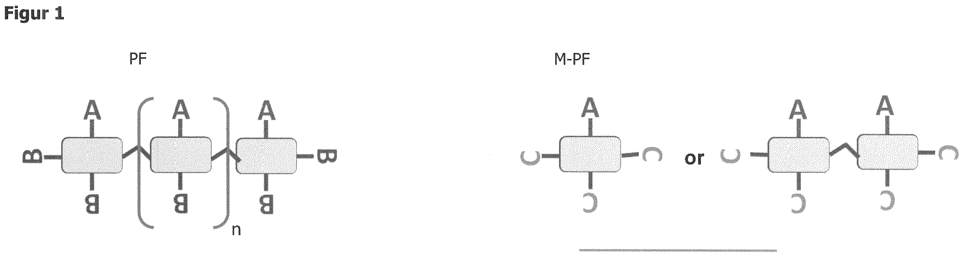

Im Gegensatz dazu zeigte der Wasser-KW von M-PF-Harz behandelten Kiefernholzproben keine offensichtlichen Änderungen und blieb bei ungefähr 142°. Dies zeigt nahezu superhydrophobe Eigenschaften an. Überraschenderweise blieben die KW -Werte der M-PF-Harz behandelten Kiefernholz-Oberfläche über die nächsten 5 Minuten konstant (siehe untere Abbildung der Figur 1), wohingegen die KW -Werte des M-PF-Harz behandelten Buchenholzes leicht abnahmen, obwohl die Oberfläche immer noch stark hydrophobe Eigenschaften aufwies. Diese Unterschiede hinsichtlich der Abnahme des KW s zwischen den Holzspezien könnte durch die unterschiedliche anatomische Struktur bedingt sein. Im Vergleich zu Kiefernholz weist Buchenholz Gefäße mit Mikroöffnungen von großem Durchmesser auf, wodurch Wasser leichter in das Holz eindringen kann.

### Synthese des hydrophobierten PF-Harzes (Prepolymer) unter Verwendung eines langkettigen Fettsäurechlorids

Die Synthese umfasst zwei Schritte. Im ersten Schritt wird ein Resol-Harz von 2,4,6-Trimethylolphenol unter basischer Katalyse hergestellt. Im zweiten Schritt erfolgt eine Veresterung zwischen dem 2,4,6-Trimethylolphenol als trimethylolierte Spezies bzw. ebenfalls vorhandenen mono- und dimethylolierten Spezies und einem langkettigen Fettsäurechlorid.

Der Hydroxymethylierungs- bzw. Methylolierungsschritt wurde unter Verwendung eines molaren Verhältnisses von Phenol zu Formaldehyd zu Natriumhydroxid von 1:1.5:0.1 durchgeführt. Die Reaktionszeit bei 60±2 °C betrug 4 Stunden. Freier Formaldehyd wurde nach jeder halben Stunde gemäß dem EN 9397-Standard bestimmt. Unter Berücksichtigung des detektierten freien Formaldehyds wurde das Substitutionslevel der Hydroxymethyl-Gruppen an dem Phenol bestimmt.

Im nächsten Schritt der Synthese war die Gegenwart von Wasser nicht wünschenswert. Deshalb wurden Formaldehyd und Wasser mittels Vakuum-Rotationsverdampfer bei 40 °C über 40 min und dann unter Verwendung einer Vakuum-Trockenapparatur bei Raumtemperatur über 12 Stunden bei 25 mBar Vakuum abdestilliert.

Um das modifzierte PF-Harz herzustellen, wurde das Resol-basierte PF-Prepolymer mit Fettsäurechlorid in Pyridin als Reaktionsmedium bei 50 °C über 2 Stunden bei positivem Stickstoffgasdruck umgesetzt.

Beide Reaktionen wurde in dem gleichen 4-Hals-Kolben, ausgestattet mit einem wassergekühlten Rückflusskühler, einem Thermometer, einem Teflon-Rührer und einem Tropftrichter, welcher verwendet wurde um Stearinsäurechlorid zuzugeben, durchgeführt.

Eine Probe (2 g) wurde nach 1 Stunde aus dem Kolben entnommen und wurde zusammen mit Ethanol gemischt, um sicherzustellen, dass die Hydrophobierung stattgefunden hat. Unreagiertes Stearinsäurechlorid ist in Ethanol löslich, wohingegen das M-PF-Harz (Prepolymer) ausfällt. Der Inhalt des Kolbens wurde nach 2 Stunden (es muss beachtet werden, dass nach Freisetzung von Salzsäure bei längerer Reaktionsdauer wieder eine Hydrolyse erfolgen kann) auf Eis gekühlt und Ethanol zugegeben. Das M-PF-Harz wurde dann Reinigungsschritten unterzogen: 4-Wasch-Ausfällungs-Zyklen in Ethanol unter Verwendung einer Zentrifuge (2000 UpM für 7 min). Nach der Aufreinigung und Trocknen im Vakuum für 1 Tag wurden 30 g von festem M-PF-Harz (Prepolymer) erhalten (siehe Figur 2).

### Kernspinresonanz (NMR)-Experimente

1H and 13C Kernspinresonanz (NMR)-Spektren im flüssigen Zustand von 5% Gew./Vol.-Lösung des modifizierten PF-Harzes (Prepolymer) in deuteriertem Chloroform (CDCl3) wurden bei Raumtemperatur mit einem Bruker DRX 500 Spectrometer (Bruker, Biospin GmbH, Ettlingen) aufgenommen. Das 13C-Spektrum wurde bei einer Frequenz von 125,7 MHz, einer Aufnahmezeit von 0,88 s, einer Pulslänge von 30°, und eine Relaxationsverzögerung von 0,4 s erhalten. Bis zu 12000 Scans wurden aufgezeichnet. Das 1H Spektrum wurde bei einer Frequenz von 300 MHz und einer Gesamtaufnahmezeit von 6 min erhalten. Bis zu 128 Scans wurden aufgezeichnet.

Typische 1H NMR-Spektren von nicht-modifiziertem (nativem PF-Harz) (Figur 3, oberes Spektrum) und modifiziertem PF-Harz (Prepolymer) (Figur 3, unteres Spektrum)), gelöst in deuteriertem Dimethylsulfoxid (d6-DMSO) und d-Chloroform sind in Figur 4 gezeigt. Die Peak-Zuordnung der Fettsäurereste war unkompliziert (siehe Figur 2 und die Einfügung): Das Triplet bei 0,85 ppm (Peak a in Figur 3 (unteres Spektrum)) stellt die Methylgruppe in der Kohlenwasserstoffkette dar; Peak d bei 2,20-2,35 ppm zeigt die Methylen-Gruppe neben der Carbonylgruppe, und der bei 1,5 ppm (Peak c) ist die Methylen-Gruppe direkt davor. Alle anderen Methylen-Gruppen sind bei Peak b bei 1,25 ppm angegeben. Die Verbreiterung der Peaks der Methylen-Gruppen nahe der Esterbindung bei 2,29 und 1,5 ppm zeigt eine erfolgreiche Veresterung an.

Figur 3 zeigt typische 13C NMR Spektren von nativem (Figur 3a) und modifiziertem PF-Harz (Figur 3b) in DMSO und d-Chloroform. Die charakteristischen chemischen Verschiebungen des nativen PF-Harzes (Prepolymer) in DMSO sind in Tabelle 1 angegeben.

**Tabelle 1. Zuordnung der chemischen Verschiebung von PF-Resolharzen in d₆-DMSO**

| **¹³C NMR *δ* (ppm)** | **Zuordnung** | **Symbol** |
|---|---|---|
| 148-160 | Phenoxy Kohlenstoffatome | **a** |
| 132,2-137 | Substituierte *para* Kohlenstoffatome (Pₛ) | **b** |
| 123-132,2 | *meta* Kohlenstoffatome (M) und substituierte *ortho* Kohlenstoffatome (Oₛ) | **c** |
| 118-122 | Unsubstituierte *para* Kohlenstoffatome (Pᵤ) | **d** |
| 111-118 | Unsubstituierte *ortho* Kohlenstoffatome (Oᵤ) | **e** |
| 58-63 | Methylol-Gruppen (MG) | **f** |
| 53-58 | **CH**₃O-CH₂-OH | **g** |
| 40 | d₆-DMSO (Lösungsmittel) | **i** |
| 30-38 | *para*/*para* Methylen-Brücken (MB_{*p*/*p*}) | **j** |
| 34-32 | *para*/*ortho* Methylen-Brücken (MB_{*p*/*o*}) | **k** |

Die neuen Signale (Tabelle 2) in dem M-PF-Harz (Prepolymer)-Spektrum zeigen den Erfolg der Veresterung, wobei die Signale zwischen 15 und 40 ppm den gegrafteten aliphatischen Kohlenstoffatomen und diejenigen von 170 bis 175 ppm dem Carbonyl-Kohlenstoffatom zugeordnet werden.

**Tabelle 2. Chemische Verschiebung von modifizierten PF Resol-Harzen in CDCl₃**

| **¹³C NMR *δ* (ppm)** | **Zuordnung** | **Symbol** |
|---|---|---|
| 170-175 | Carbonyl-Kohlenstoffatom | **a** |
| 15-40 | Gegraftete, aliphatische Kohlenstoffatome | **b** |
| 78 | d-Chloroform (Lösungsmittel) | **c** |

Hydroxymethylierte Phenole enthalten primäre und sekundäre Hydroxylgruppen. Diese Gruppen könnten während der Veresterung (Hydrophobisierung) mit Stearinsäurechlorid konkurrieren. Primäre Alkohole, so wie die Hydroxymethyl-Gruppen (-CH₂-OH) am Phenolring sind relativ reaktiv im Vergleich zu sekundären Hydroxylgruppen (die phenolische -OH-Gruppe am Benzolring). Die Peaks bei 5,1 ppm (1H NMR) und 145 ppm (13C NMR) gehören zu der Hydroxylgruppe am Benzolring und deren Gegenwart bestätigt, dass die Hydroxylgruppe am Benzolring nicht verestert wurde. Deshalb wurde ein Gemisch aus zwei Phenolderivaten, d.h. dem zweifach und dem dreifach methylolierten Phenolderivat (Verbindungen (b) und (h), siehe Tabelle oben) erhalten.

### Zitierte Literatur:

- Wimmer et al., "Water sorption mechanisms of commercial wood adhesive films", Wood Sci Technol, 2013, 47, 763-775
- Y. Wang, X. Wang, L.-O. Heim, H. Breitzke, G. Buntkowsky, K. Zhang. "Superhydrophobic surfaces from surface-hydrophobized cellulose fibers with stearoyl group". Cellulose, 2015, 22, 289-299.
- K. Wang, Y. Dong, Y. Yan, W. Zhang, C. Qi, C. Han, J. Li und S. Zhang, "Highly hydrophobic and self-cleaning bulk wood prepared by grafting long-chain alkyl onto wood cell walls", Wood Sci Technol, 2017, 51, 395-411
- Patentschrift 456 820
- Patentschrift und 391072
- Patentschrift 678 719
- US 3,227,686
- DE 1 294 669
- DE2711958
- US 3,422,068
- CN104802255
- CN104802253
- Dunky, M., Niemz, P. (2002) Holzwerkstoffe und Leime - Technologie und Einflussfaktoren. Springer-Verlag, Berlin, Heidelberg, Seiten 122-128.
- Deppe, H., Ernst, K. (2000) Taschenbuch der Spanplattentechnik. DRW-Verlag, Leinfelden-Echterdingen.
- Lehrbuch der Lacktechnologie: 5. Auflage" von Brock et al. (Vincentz, 2017), Kapitel 2.1.
- Dehabadi et al., 2013, "Durable press finishing of cotton fabrics: An overview." Textile research journal: 83(13) 1-22

## Patentansprüche

1. Verfahren zur Herstellung von hydrophobierten Werkstoffen und hydrophobiertem Material, umfassend die Schritte:
(i) Bereitstellen von zu behandelndem Material;
(ii) In-Kontakt-Bringen des Materials aus Schritt (i) mit einem härtbaren, hydrophobierten Harz, welches eines oder mehrere von A, B und C enthält:
A) Phenol-Formaldehyd-Harz, welches monomere Phenolderivate aufweist, die ein oder mehrere [-CH₂-O-C(O)R₁]-Gruppen am Aromaten (durch Veresterung der Methylolgruppen am Phenol) und/oder eine [-O-C(O)R₁]-Gruppe am Aromaten (durch Veresterung der phenolischen Hydroxygruppe) enthalten;
B) Melamin-Formaldehyd-Harz, welches monomere Melaminderivate aufweist, die ein oder mehrere [-CH₂-O-C(O)R₁]-Gruppen an einem oder mehreren primären Stickstoffatom(en) des Aromaten (die aus den NH₂-Gruppen des Melamins stammen) enthalten;
C) DMDHEU-Harz, welches monomere Derivate von 1,3-Dimethylol-4,5-dihydroxyethylen-Harnstoff (DMDHEU) aufweist, die ein oder mehrere [-CH₂-O-C(O)R₁]-Gruppen an den Ringstickstoffatomen enthalten:
wobei R₁ in (A), (B) und (C) jeweils unabhängig ausgewählt ist aus der Gruppe bestehend aus
gegebenenfalls substituiertem C₁₋₃₀ Alkyl, gegebenenfalls substituierten C₁₋₃₀ Alkylamidyl, gegebenenfalls substituiertem C₁₋₃₀ Alkoxy, gegebenenfalls substituiertem C₁₋₃₀ Heteroalkyl, gegebenenfalls substituiertem C₂₋₃₀ Alkenyl, gegebenenfalls substituiertem C₂₋₃₀ Alkinyl, gegebenenfalls substituiertem C₇₋₃₀ Alkylaryl, gegebenenfalls substituiertem C₇₋₃₀ Arylalkyl, gegebenenfalls substituiertem C₃₋₃₀ Heterocycloalkyl, gegebenenfalls substituiertem C₃₋₃₀ Alkylheterocyclyl,
gegebenenfalls substituiertem C₈₋₃₀ Heterobicyclus, gegebenenfalls substituiertem C₁₂₋₃₀ Biaryl, gegebenenfalls substituiertem C₁₀₋₃₀ Bicycloaryl, gegebenenfalls substituiertem C₈₋₃₀ Bicycloalkyl, gegebenenfalls substituierten C₃₋₂₀ Heterocycloaryl,
wobei der Ausdruck "gegebenenfalls substituiert" bedeutet, dass 1-3 Substituenten vorhanden sind, ausgewählt aus der Gruppe bestehend aus Halogen, -SH, -OH, -CN,-OR, -SR, -COR, -COOR, -NH₂, -NHR, -N(R)₂-C_{L}-NH-C₁₋₆ Alkyl, -N(C₁₋₆ Alkyl)₂, -NH(C₁₋₆ Alkyl), -C_{L}-NH₂, halogen-substituiertes C₁₋₆ R, =O, C₁₋₆ R, wobei R ein C₁₋₁₀)-Alkyl, C₆₋₁₂-Aryl, C₂₋₁₀ Alkenyl, C₂₋₁₀ Alkinyl, C₇₋₁₀ Alkylenyl, C₇₋₁₀ Arylalkyl, C₂₋₁₀ Heterocycloalkyl, oder C₂₋₁₀ Alkylheterocyclyl ist,
und wobei der Ausdruck "Alkyl", "Alkenyl", "Alkinyl" lineare, verzweigte und zyklische Alkyl-, Alkenyl-, Alkinylketten und gemischte Varianten davon, umfasst;
(iii) Behandlung, insbesondere Aushärten, des Materials aus Schritt (ii) bei erhöhter Temperatur unter Erhalt eines hydrophobierten Cellulose- und/oder Lignin-haltigen Materials.

2. Verfahren nach Anspruch 1, wobei das härtbare, hydrophobierte Phenol-Formaldehyd-Harz (A), das/die folgende(n) Struktureinheit(en), bevorzugt als monomere Prepolymer(e), enthält:
(1) 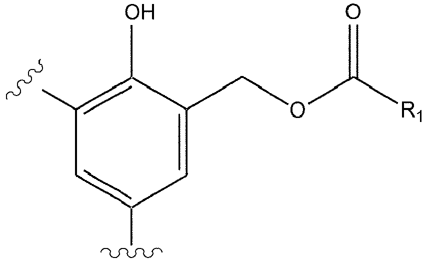 und/oder
(2) 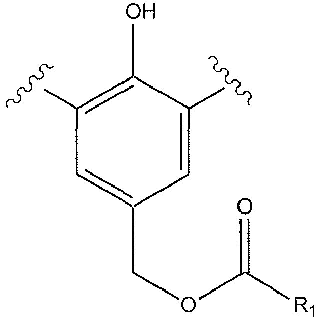 und/oder
(3) 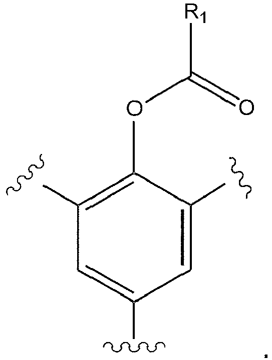 wobei R₁ wie in Anspruch 1 definiert ist.

3. Verfahren nach einem der vorangegangenen Ansprüche, wobei das härtbare, hydrophobierte Phenol-Formaldehyd-Harz (A), das folgende monomere Prepolymer enthält: 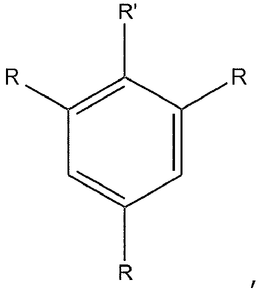
wobei R unabhängig ausgewählt ist aus -H, [-CH₂-O-C(O)R₁] und [-CH₂-OH], wobei bevorzugt mindestens ein R-Substituent [-CH₂-OH] ist,
wobei R' ausgewählt ist aus -OH und [-O-C(O)R₁], wobei
R₁ wie in Anspruch 1 definiert ist, und wobei mindestens eines von R und R' [-O-C(O)R₁] oder [-CH₂-O-C(O)R₁] ist.

4. Verfahren nach Anspruch 1, wobei das härtbare, hydrophobierte Melamin-Formaldehyd-Harz (B), die folgende Struktureinheit enthält: 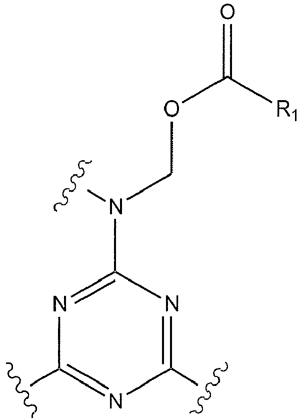 wobei R₁ wie in Anspruch 1 definiert ist.

5. Verfahren nach einem der vorangegangenen Ansprüche, wobei das härtbare, hydrophobierte Melamin-Formaldehyd-Harz (B), das folgende, monomere Prepolymer enthält: 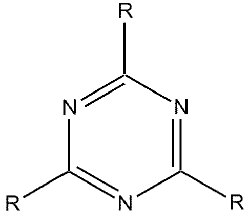
wobei R unabhängig ausgewählt ist aus -NH₂, [-NH-CH₂-O-C(O)R₁], [-N(CH₂-O-C(O)R₁)₂], [-NH-CH₂-OH], und [-N(CH₂-OH)₂], wobei bevorzugt mindestens ein R-Substituent [-NH-CH₂-OH], oder [-N(CH₂-OH)₂] ist;
wobei R₁ wie in Anspruch 1 definiert ist, und wobei mindestens ein R [-NH-CH₂-O-C(O)R₁], oder [-N(CH₂-O-C(O)R₁)₂], ist; und wobei die einzelnen R₁-Gruppen gleich oder unterschiedlich sein können.

6. Verfahren nach Anspruch 1, wobei das härtbare, hydrophobierte DMDHEU-Harz (C), die folgende Struktureinheit, bevorzugt als monomeres Prepolymer, enthält: 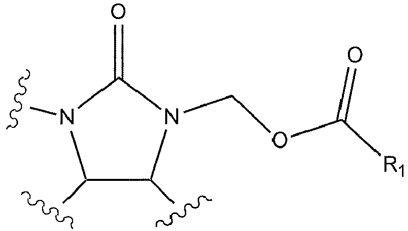 wobei R₁ wie in Anspruch 1 definiert ist.

7. Verfahren nach einem der vorangegangenen Ansprüche, wobei das härtbare, hydrophobierte DMDHEU-Harz (C), das folgende, monomere Prepolymer enthält: 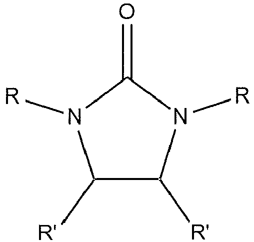
wobei R unabhängig ausgewählt ist aus [-CH₂-O-C(O)R₁], und [-CH₂-OH];
wobei R' unabhängig ausgewählt ist aus -OH und [-O-C(O)R₁];
wobei R₁ wie in Anspruch 1 definiert ist, und wobei mindestens ein R oder R' [-CH₂-O-C(O)R₁] oder [-O-C(O)R₁] ist, bevorzugt ist das monomere Prepolymer

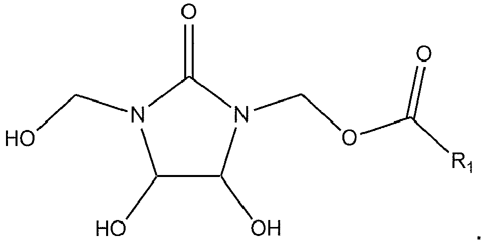

8. Verfahren nach einem der vorangegangenen Ansprüche, wobei das härtbare, hydrophobierte Phenol-Formaldehyd-Harz (A) eine oder mehrere Verbindungen enthält, ausgewählt aus der Gruppe bestehend aus:
| | |
|---|---|
| (a) | (b) |
| 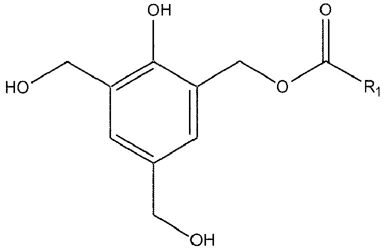 | 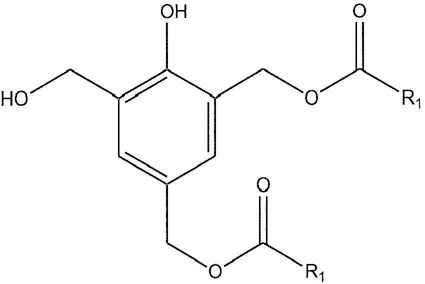 |
| (c) | (d) |
| 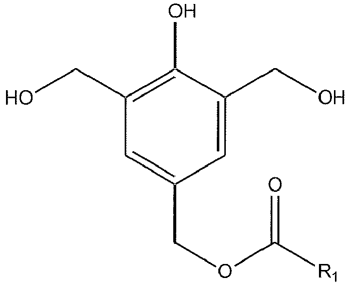 | 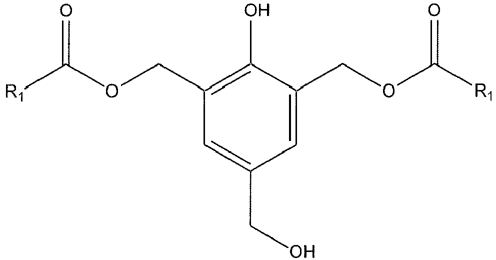 |
| (e) | (f) |
| 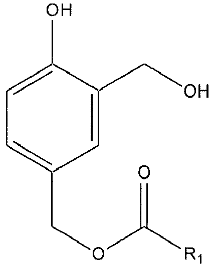 | 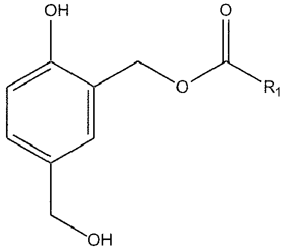 |
| (g) | |
| 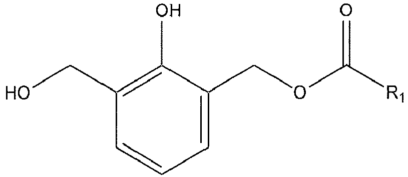 | |

9. Verfahren nach einem der vorangegangenen Ansprüche, wobei das härtbare, hydrophobierte DMDHEU-Harz (C) eine oder mehrere Verbindungen enthält, ausgewählt aus der Gruppe bestehend aus:
| | |
|---|---|
| (a") | (b") |
| 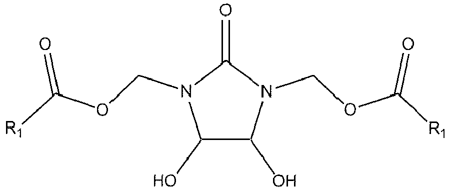 | 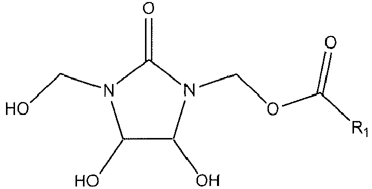 |
| (c") | (d") |
| 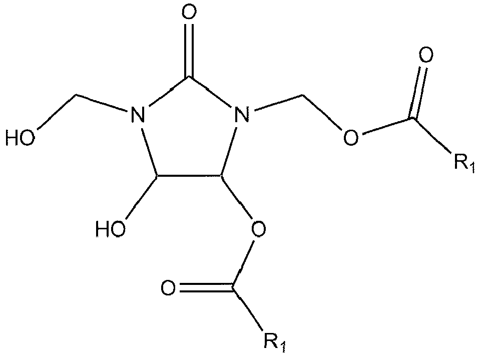 | 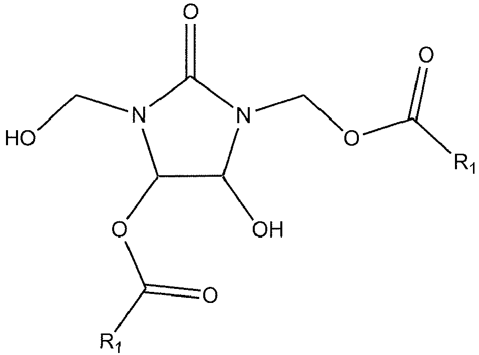 |

10. Verfahren nach einem der vorangegangenen Ansprüche, wobei der hydrophobierte Werkstoff oder das hydrophobierte Material hydrophobiertes Cellulose- und/oder Lignin-haltiges Material ist, das bevorzugt ausgewählt ist aus der Gruppe bestehend aus Holz oder Holzwerkstoffen.

11. Härtbares, hydrophobiertes Harz wie in einem der vorangegangenen Ansprüche definiert.

12. Verwendung des härtbaren, Harzes nach Anspruch 11 zur Hydrophobierung und/oder als Haftvermittler von Cellulose- und/oder Lignin-haltigem Material, insbesondere Holz und Holzwerkstoffe, bevorzugt wobei das härtbare, hydrophobierte Phenol-Formaldehyd-Harz als Bestandteil eines Lacks oder einer Holzschutzfarbe eingesetzt wird.

13. Verfahren zur Herstellung des härtbaren, hydrophobierten Harzes wie in Anspruch 11 definiert, umfassend die Schritte:
a) Umsetzen von Formaldehyd mit Phenol und/oder Melamin und/oder Harnstoff+Glyoxal in der Gegenwart eines Katalysators;
b) Verestern des Reaktionsgemisches aus Schritt (a) unter Verwendung von einem oder mehreren Säurechlorid(en) der Formel R₁(O)X, wobei R₁ wie in einem der vorangegangenen Ansprüche definiert ist und wobei X eine Abgangsgruppe ist.

14. Verfahren zur Herstellung des härtbaren, hydrophobierten Phenol-Formaldehyd-Harzes wie in einem der vorangegangenen Ansprüche definiert, umfassend die Schritte:
A) Umsetzen von Formaldehyd mit Phenol oder DMDHEU in der Gegenwart eines basischen Katalysators;
B) Aufbringen einer Schutzgruppe an zumindest einem Teil der [-CH₂-OH]-Gruppen;
C) (Teil-)Verestern der ungeschützten [-CH₂-OH]-Gruppen und/oder OH-Gruppen am Phenol/DMDHEU des Reaktionsgemisches aus Schritt (B) unter Verwendung von einem oder mehreren Säurechlorid(en) der Formel R₁(O)X, wobei R₁ wie in einem der vorangegangenen Ansprüche definiert ist und wobei X eine Abgangsgruppe ist; und
D) Abspalten der Schutzgruppe.

15. Hydrophobiertes Cellulose- und/oder Lignin-haltiges Material, hergestellt oder herstellbar durch ein Verfahren gemäß einem der Ansprüche 1-10, welches bevorzugt in dem ausgehärteten, hydrophobierten Phenol-Formaldehyd-Harz die folgende Struktureinheit als Polymerbestandteil enthält:
(1) 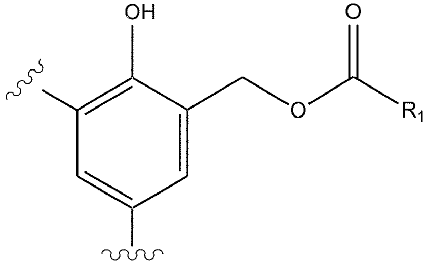 und/oder
(2) 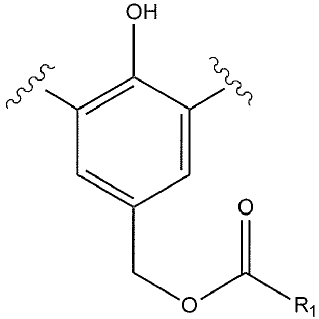 und/oder
(3) 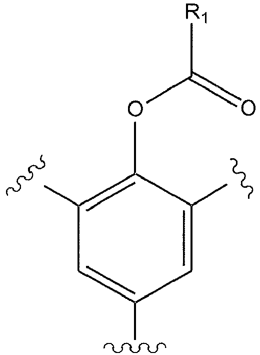 und/oder 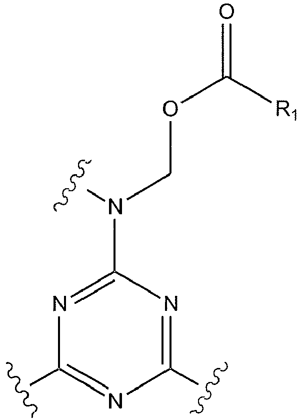 und/oder 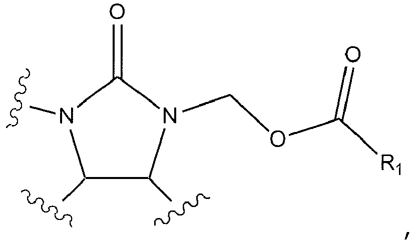 wobei R₁ jeweils wie in den vorangegangenen Ansprüchen definiert ist.
